# EUROPEAN PATENT SPECIFICATION

(11) **EP 3 213 288 B1**
(45) Date of publication and mention of the grant of the patent: **25.09.2019**
(21) Application number: 15855596.1
(22) Date of filing: 30.10.2015
(51) Int. Cl.: G06Q 50/30, H04N 7/18, G06K 9/00, H04N 19/30, H04N 5/225, H04N 5/232, H04N 5/247, H04N 19/426

(54) **PARKING AND TRAFFIC ANALYSIS**
PARK- UND VERKEHRSANALYSE
ANALYSE DE STATIONNEMENT ET DE TRAFIC

(30) Priority: 30.10.2014 US 201462072835 P
(43) Date of publication of application: 06.09.2017
(73) Proprietor: Sensity Systems Inc., Sunnyvale CA 94085 (US)
(72) Inventor: RYHORCHUK, Kent W., Sunnyvale, California 94085 (US); GOLD, Ezra, Sunnyvale, California 94087 (US)
(74) Representative: Isarpatent
(86) International application number: PCT/US2015/058455
(87) International publication number: WO 2016/070121

(56) References cited:
- WO-A1-2010/123708
- WO-A1-2014/092600
- KR-A- 20120 105 642
- KR-A- 20130 044 925
- US-A1- 2009 015 671
- US-A1- 2012 044 350
- US-A1- 2012 044 350
- US-A1- 2012 307 070
- US-A1- 2013 271 598
- US-A1- 2014 210 646
- US-A1- 2014 257 943
- US-B1- 7 688 225
- US-B1- 7 688 225

## Description

### TECHNICAL FIELD

Embodiments of the present disclosure relate generally to capturing and processing video data and, more particularly, but not by way of limitation, to a system and method for parking and traffic analysis.

### BACKGROUND

Smart cities are emerging where cities, towns, and other public and private groups are using the existing infrastructure (e.g., power and lighting infrastructure) of an area, along with digital and communications technologies, to enhance the quality and performance of urban services provided to citizens. The publication US 2012/0044350 describes a surveillance system comprising cameras installed on light poles, connected via a wireless network to a server. The publication US 2013/0271598 describes a surveillance system comprising a camera connected to a server, where a video stream received from the camera is analysed to extract at least one metric from the content of the video stream.
The publication US 2012/0044350 describes a surveillance system comprising cameras installed on light poles, connected via a wireless network to a server. A processor associated to each camera performs detection of objects and compression of the video signals and a streamer prepares a stream for a remote device.

### BRIEF DESCRIPTION OF THE DRAWINGS

Various ones of the appended drawings merely illustrate example embodiments of the present disclosure and cannot be considered as limiting its scope.
FIG. 1 is a system component block diagram of a communication system including a video sensor mechanism (or parking camera device) suitable for use in various embodiments.
FIG. 2A is a component block diagram of an embodiment parking camera device.
FIG. 2B is a perspective view of an embodiment parking camera device.
FIG. 2C is a perspective view of an embodiment parking camera device.
FIGS. 2D-F are side views illustrating orientations of cameras within an embodiment parking camera device.
FIG. 3A is a side view of a parking camera device attached to a light pole, according to an example embodiment.
FIG. 3B is a side view of a parking camera device attached to a light pole illustrating a field of view (FOV), according to an example embodiment.
FIG. 3C is a side view of a parking camera device configured to capture an image scene within an area along a road beneath a light pole, according to an example embodiment.
FIG. 3D is a top view of a parking camera device mounted above a street and sidewalk, according to an example embodiment.
FIG. 3E is a front view of a camera sensor of a parking camera device, according to an example embodiment.
FIG. 3F is a perspective view of a camera and associated shade suitable for use in a parking camera device, according to an example embodiment.
FIG. 3G is a perspective view of a pair of cameras suitable and associated shade for use in a parking camera device, according to an example embodiment.
FIG. 4A is a process flow diagram illustrating a method for a computing device to process video data obtained by a camera device, according to an example embodiment.
FIG. 4B is a process flow diagram illustrating a method for processing video data to perform video data analysis related to an application, according to an example embodiment.
FIG. 4C is a process flow diagram illustrating a method for processing video data to perform video data analysis related to a parking application, according to an example embodiment.
FIG. 4D is a process flow diagram illustrating a method for processing video data to perform video data analysis related to a traffic application, according to an example embodiment.
FIG. 4E is a process flow diagram illustrating a method for processing and analyzing video data for an application, according to an example embodiment.
FIG. 5 is a component block diagram of an exemplary server computing device suitable for use in various embodiments.

The headings provided herein are merely for convenience and do not necessarily affect the scope or meaning of the terms used.

### DETAILED DESCRIPTION

The description that follows includes systems, methods, techniques, instruction sequences, and computing machine program products that embody illustrative embodiments of the disclosure. In the following description, for the purposes of explanation, numerous specific details are set forth in order to provide an understanding of various embodiments of the inventive subject matter. It will be evident, however, to those skilled in the art, that embodiments of the inventive subject matter may be practiced without these specific details. In general, well-known instruction instances, protocols, structures, and techniques are not necessarily shown in detail.

The word "exemplary" is used herein to mean "serving as an example, instance, or illustration." Any implementation described herein as "exemplary" is not necessarily to be construed as preferred or advantageous over other implementations.

The term "computing device" is used herein to refer to any one or all of cellular telephones, smart-phones, web-pads, tablet computers, Internet-enabled cellular telephones, Wi-Fi® enabled electronic devices, personal data assistants (PDA's), laptop computers, server computers, personal or desktop computers, and similar electronic devices equipped with at least a processor. In various embodiments, such devices may be configured with one or more network transceivers to establish a wide area network (WAN) and/or local area network (LAN) connection (e.g., an LTE, 3G or 4G wireless wide area network transceiver, a wired connection to the Internet, or Wi-Fi®).

The term "server" is used to refer to any computing device capable of functioning as a server, such as a master exchange server, web server, mail server, document server, and a personal or mobile computing device configured with software to execute server functions (e.g., a "light server"). A server may be a dedicated computing device or a computing device including a server module (e.g., running an application which may cause the computing device to operate as a server). A server module (or server application) may be a full function server module, or a light or secondary server module (e.g., light or secondary server application) that is configured to provide synchronization services among the dynamic databases on computing devices. A light server or secondary server may be a slimmed-down version of server type functionality that can be implemented on a personal or mobile computing device, such as a smartphone, thereby enabling it to function as an Internet server (e.g., an enterprise e-mail server) to a limited extent, such as necessary to provide the functionality described herein.

The term "demarcated parking space" is used herein to refer to a parking space (or parking spot) that is marked, such as a marked-off spot on a roadway. For example, a demarcated parking space may be a marked space that runs parallel with or along a roadway and/or sidewalk, or a marked space that runs front-in (e.g., angled parking in a lot or garage, etc.). Similarly, a "non-demarcated parking area" may refer to a general parking area along the street, such as an area where there are no marked spaces or spots.

The various embodiments provide methods, devices, systems, and computer-readable storage medium for providing video sensor mechanisms (referred to as "parking camera devices") configured for use with roadway parking and traffic analysis applications. In some embodiments, the video sensor mechanism may be used to monitor and analyze traffic and parking in parking lots or garages. The video sensor mechanisms may be implemented with a plurality of video cameras, such as a pair of video cameras. In the described embodiments, the parking camera devices are also referred to as camera devices or video processing systems. Although in various embodiments, the parking camera device may be used to capture and process parking-related video for use by a parking application, the parking camera device may be used to capture and process video data that is not specifically used by a parking application, for example, to monitor occupancy of parking spaces or the arrival or departure of vehicles in and out of parking spaces or areas, respectively.

In example embodiments, a parking camera device may be a mechanism that may be installed on conventional street lamps, light poles, and other structures in areas where vehicles may move and park. For example, the parking camera device may be installed on the arm of a light pole that is located on a sidewalk at the side of a road. The parking camera device may include a plurality of cameras (e.g., two cameras coupled to the housing of the parking camera device, etc.) that are configurable and oriented such that their FOV enable the capturing of imagery (e.g., video data) of the areas below and near the parking camera device. In other example embodiments, the parking camera device may represent a lighting fixture that includes multiple cameras (e.g., pair of cameras) and a computing device integrated within the same enclosure (e.g., housing). In various embodiments, the term "imagery" refers to capturing or collecting visual images or video data of scenes within the FOV of the parking camera device (e.g. area along the street or sidewalk). In some embodiments, the imagery may represent a sequence of still images rather than video data. For example, the FOVs of the cameras may include a known (or demarcated) parking space under a light pole. As another example, the FOVs of the cameras may include parking areas along the side of the roadway and one or more lanes of traffic within the roadway.

Video data from the cameras may be obtained and processed by various computing devices, such as the parking camera device itself and/or a remote server associated with the parking camera device. Such processing may include generating useful statistics and other information that may be used by parking enforcement agencies, consumers, police, and other parties. In various embodiment, the video analysis, which is performed by the parking camera device (or video processing system) alone or in combination with a remote computing device, allows users to capture, index, track and monitor types and speed of vehicles, parking spaces, people and objects, colors, and more. For example, the video analysis of the various image scenes may implement object tracking; license plate recognition; dwell and loitering of vehicles and people; vehicle and people counting; speed or movement analysis; queue management analysis; demographics; and facial surveillance. The examples of video data analysis described above may be used to help monitor parking spaces, traffic, and other conditions and scenes along a roadway, sideway, or within the FOV of the parking camera device.

In example embodiments, the results of the video analytics may be transmitted and displayed on user devices (or remote devices), or reported to various authorized user of the video analytics data. The results of the video analytics may provide useful insights to authorized users, for example, the results of the video analytics may be used to recognize threats based on triggers using facial surveillance, advanced object tracking and license plate recognition. In certain circumstances, the results from the video analytics may be used to reduce investigation time with a centralized, searchable database (e.g., by a service platform and associated applications) that includes crime investigation analytics.

In various embodiments, the cameras of the parking camera device may be covered with shades (or masks) that limit the exposure of the camera lenses, thereby reducing potential sunlight that may be received by the cameras. Further, the cameras may be adjustable (e.g., oriented via adjustable mounting brackets) such that the cameras may be configured to only have FOVs that do not include the horizon, minimizing sunlight exposure, and/or do not include views into buildings near the parking camera device. With such shades and adjustability, the parking camera device may employ the cameras to capture relevant and useful video imagery for processing, providing improved views of parking areas and enabling detections of occupancy and other conditions useful for various parties (e.g., obstructions, pedestrian traffic, vehicle traffic, etc.).

Embodiment methods of this disclosure may improve the functioning of a parking camera device by including compression algorithms that may be executed to generate smaller and/or optimized data streams that may require less energy and time to transmit, render, and/or otherwise process. Further, as the parking camera device may also utilize software that performs video analytics that report information about scenes represented in captured video data (e.g., cars moving or parked, etc.), the parking camera device may be more power efficient by selectively reducing or eliminating its transmissions (or streaming) of raw video when no useful information is included in such video. Further, by using shades and configurations/orientations for the cameras, parking camera devices may obtain and utilize video data that does not include an abundance of unusable content (e.g., over-exposed due to sunlight, etc.), and thus less processing and/or simpler analytical or recognition algorithms/software may be used to produce useful analysis from the video data. In some embodiments, the unusable content includes raw or analyzed data outside the area of interest. The area of interest may be represented by the FOV of one or more parking camera devices. In this way, the parking camera device may have a more efficient use of energy and processing resources.

Various embodiments provide methods, devices, systems, and non-transitory process-readable storage media for utilizing video data obtained by cameras of a parking camera device. An embodiment parking camera device coupled to a light pole may include a processor configured to execute various processor-executable instructions, a memory configured to store data related to video data and coupled to the processor, a transceiver for wireless communications via a wireless network, coupled to the processor, and a plurality of cameras paired together and configured to capture video data, wherein each of the plurality of cameras may be coupled to the processor and configured with a shade. Each camera of the plurality of cameras may utilize a configurable orientation on a plurality of axes. In this way, each of the plurality of cameras may be oriented such that it may record video data that may be used for both analyzing traffic and parking along an area (e.g., a roadway). The field of view (FOV) of each camera may be limited by the orientation of each camera.

In some embodiments, the parking camera device may further include a video analysis subsystem configured to analyze video data captured by the plurality of cameras, and a video compression subsystem configured to encode the captured video data for one or more of local storage and network streaming to a remote device, wherein the video analysis subsystem and the video compression subsystem are executed by the processor. In some embodiments, the transceiver may be configured to exchange the wireless communications via at least one of a wireless local area network and a cellular wide area network.

In some embodiments, each of the plurality of cameras may have a 16:9 aspect ratio. In some embodiments, the plurality of cameras may be paired together to form a wide-angle view with a 32:9 aspect ratio. In some embodiments, each of the plurality of cameras may have a FOV that may be approximately 90 degrees (e.g., slightly less than 90 degrees). In some embodiments, each of the plurality of cameras may have a FOV that overlaps with another FOV of another of the plurality of cameras. In some embodiments, a combined FOV of the plurality of cameras may be approximately (e.g., slightly less than) 180 degrees. In some embodiments, each of the plurality of cameras may be pointed downward (or across the street from the lamp pole) such that each has a FOV that may be aligned along a section of a street below the light pole or other mounting location and that may be slightly overlapping with a FOV of another camera such that the area directly under the pole is visible to the plurality of cameras. In some embodiments, a lighting pattern of a street lamp and the FOV of the plurality of cameras may be matched.

In various embodiments, the cameras within a parking camera device (or video processing system) may be pointed downward such that the FOV includes the area beneath the light pole (or other mounting structure) attached to the parking camera device. The area below that light pole may include a street and/or sidewalk under or near the light pole. In other embodiments, the cameras within the parking camera device (or video processing system) may be pointed such that the FOV includes that area across the street from the light pole (or other mounting structure). In this scenario, it is possible for the parking camera device to monitor parking, traffic, and other conditions on the other side of the street from the light pole (or other mounting structure) that is attached to the parking camera device. Thus, in some embodiments, the parking camera device (or video processing system) is configurable to capture video data on either side of the street.

In various embodiments, the parking camera device includes a pair of cameras or a plurality of cameras that create a combined FOV. In other embodiments, the parking camera device may include one or more individual cameras that do not have a combined FOV.

An embodiment method, performed by a processor of a computing device, may include operations to utilize video data obtained by cameras of a parking camera device, the operations including obtaining video data of an area near a light pole from a plurality of cameras of parking camera device positioned on the light pole, processing the obtained video data via video analysis functionalities, and performing one or more of the following operations based on the processed video data: determining an occupancy of demarcated parking spaces below the light pole based on the processed video data, determining an occupancy of non-demarcated parking areas below the light pole based on the processed video data, tracking at least one of an arrival and a departure of a vehicle in a parking space below the light pole, identifying at least one of a presence and a speed of a vehicle on a roadway based on the processed video data, and identifying at least one of a presence and a speed of an object that is on or crossing the roadway based on the processed video data (e.g., detecting a stopped vehicle on the roadway, an object obstructing the roadway, etc.). In some embodiments, the method may further include transmitting a first message to parking enforcement device based on the tracking information, and transmitting a second message with identification information related to activity on the roadway to traffic-related device.

In some embodiments, the method may further include compressing the obtained video data as low-resolution and high-resolution compressed streams for each of the plurality of camera sensors, and storing the high-resolution compressed streams. In some embodiments, the method may further include transmitting the low-resolution compressed streams for display on a remote.

In some embodiments, the computing device may be a remote server. In some embodiments, obtaining the video data of the area near a light pole from a plurality of cameras of parking camera device positioned on the light pole may include receiving the video data from the parking camera device via the Internet. In some embodiments, the computing device is the parking camera device.

In some embodiments, transmitting the first message or the second message may include transmitting a third message to a third-party computing device, wherein the third-party computing device is associated with a parking enforcement entity, the police, or an individual user.

An embodiment system may include a parking camera device, comprising a first processor configured to execute various processor-executable instructions, a memory configured to store data related to video data and coupled to the first processor, a transceiver for wireless communications via a network, coupled to the first processor, and a plurality of cameras paired together and configured to capture video data coupled to the first processor, wherein each of the plurality of cameras is configured with a shade and may be coupled to the parking camera device such that each camera has a configurable orientation on a plurality of axes (e.g., each camera is adjustable in a mounting bracket such that each camera may be aligned to have a FOV that is slightly overlapping with other cameras' fields of view before installation at a parking area location, and during installation, the cameras may be adjusted via the mounting bracket in three axes), the system further comprising a remote server comprising a second processor and a network interface for exchanging communications via the network, wherein the first processor is configured with processor-executable instructions to perform various steps of the above described embodiment method, and wherein the second processor is configured with processor-executable instructions to perform various steps of the above-described embodiment method. In some embodiments individual fields of view for the plurality of cameras may be aligned and the relative camera positions may be secured as a set. Further, the plurality of cameras may be aimed as a single FOV.

Further embodiments include a computing device configured with processor-executable instructions for performing operations of the methods described above. Further embodiments include a non-transitory processor-readable medium on which is stored processor-executable instructions configured to cause a computing device to perform operations of the methods described above.

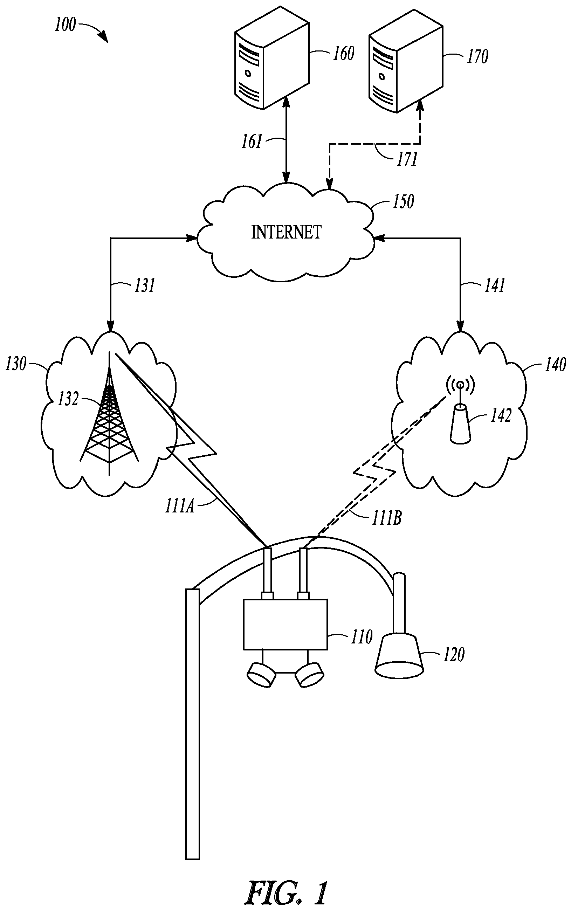

FIG. 1 illustrates an exemplary communication system 100 including at least a parking camera device 110 suitable for various embodiments. The parking camera device 110 may be attached to a light pole 120, such as a street light pole (or street lamp) positioned near a street, roadway, parking lot, etc. The parking camera device 110 may include wireless communication functionalities, such as antenna and transceivers for communicating with various communication networks. In particular, the parking camera device 110 may be configured to exchange wireless signaling 111A with a base station 132 associated with a wide area network (WAN) (e.g., cellular network). For example, the parking camera device 110 may include a cellular network chip (or transceiver or modem, etc.) for communicating with a Long-Term Evolution (LTE) cellular network, a Global System for Mobile Communications (GSM) cellular network, and/or other networks utilizing various radio technologies/ standards. In some embodiments, the parking camera device 110 may be configured to exchange wireless signaling 111b with an access point 142 associated with a local area network (LAN) 140. For example, the parking camera device 110 may include a radio utilizing IEEE 802.11 standards/ specifications (e.g., Wi-Fi® radio, etc.) for communicating with a wireless LAN. Such networks 130, 140 may be connected to the Internet 150 via connections 131, 141, respectively.

Accordingly, via the networks 130, 140, the parking camera device 110 may be configured to communicate with various remote devices over the Internet 150. For example, the parking camera device 110 may exchange Internet protocol (IP) communications with any number of devices, such as a remote server 160 connected to the Internet 150 via a wired or wireless connection 161. In some embodiments, the parking camera device 110 may be configured to transmit data, such as video data of a street captured via camera sensors, for processing, relay, and/or storage by the remote server 160. For example, the remote server 160 may be a device associated with a data mining, data management, surveillance, and/or traffic management service to which the parking camera device 110 provides video data. In some embodiments, the remote server 160 may be configured to communicate with other devices via the Internet 150, such as a third-party computing device 170 connected to the Internet 150 via a wired or wireless connection 171. For example, the remote server 160 may be configured to send processed video data and/or analytics to another server, smartphone, laptop, etc. that is associated with a police or parking entity, a consumer, or other interested party. In some embodiments, the parking camera device 110 may be configured to communicate directly with the third-party computing device 170 via WAN communications.

In various embodiments, the video processing system (or parking camera device) represents a node within a lighting network such as a gateway node platform. The gateway node platform is in communication with a remote server (e.g. the remote server 160) such as a service platform associated with one or more applications, such as a parking application or a traffic application. The gateway node platform and the service platform may be included within a lighting infrastructure application framework (LIAF). An example of the gateway node platform, a service platform with associated applications, and a LIAF is described in commonly owned US Publication 2014/0084795 titled "Network Lighting Infrastructure for Sensing Applications" filed on September 11, 2013 assigned to Sensity Systems Inc.

In an example embodiment, the LIAF uses a lighting infrastructure (e.g., a network of light nodes or poles) as a platform for business and consumer applications implemented using a combination of hardware and software. The main components of the LIAF include node hardware and software, sensor hardware, site specific or cloud based server hardware, network hardware and software and wide-area network resources that enable data collection, analysis, action invocation and communication with applications and users. In various embodiments, the video cameras, located at a node in a network of lighting nodes, represents sensors or sensing devices. Video data captured by the video cameras are processed and analyzed at the nodes (also referred to as node processing), analyzed at the service platform (which may be implemented by cloud based servers), or analyzed by a combination of the nodes and service platform. The analyzed video data is accessible to one or more application associated with the service platform and such that information related to the analyzed video data can be presented (or reported) to an authorized user via a user application.

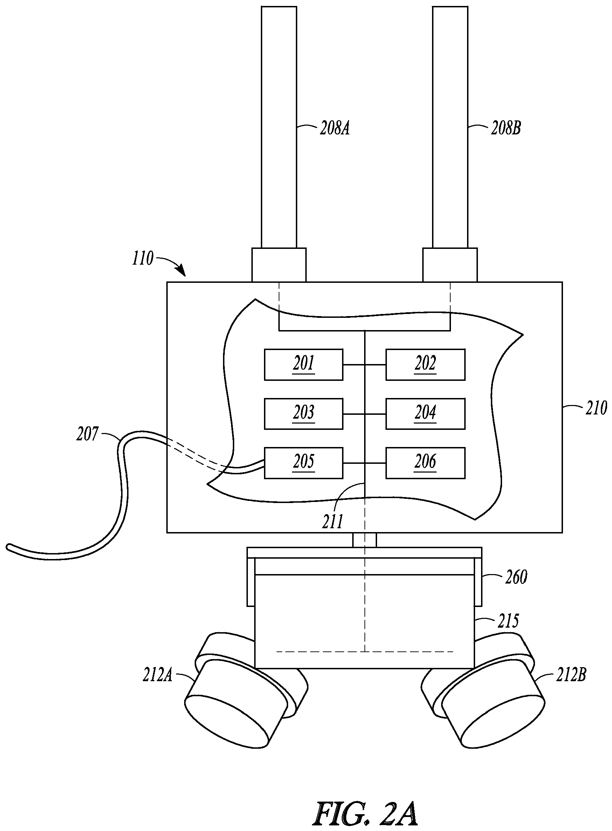

FIG. 2A illustrates exemplary components of an embodiment parking camera device 110. Although the parking camera device 110 is described in the context of obtaining parking-related information in some embodiments, the parking camera device 110 is not limited to obtaining parking-related information. In example embodiments, the parking camera device 110 may be referred to as a camera device or a video processing system. In an example embodiment, the parking camera device 110 may include a processor 201, a storage unit 202 (e.g., volatile and/or non-volatile memory, solid state disk, etc.), a video analysis subsystem 203 configured to analyze video data from cameras 212A, 212B, a video compression subsystem 204 configured to encode video for local storage (e.g., within the storage unit 202) and/or for network streaming, a wireless communication transceiver 206 (or radio) for network connectivity (e.g., communications via local area network (LAN), wide area network (WAN), etc.), and a power interface component 205 configured to deliver power to the various components of the parking camera device 110. In some embodiments, the storage unit 202 may be a solid state disk configured to continuously store high-quality video as well as cache video analytics data, such as caching data when there is a temporary lapse in network availability.

The transceiver 206 (also referred to as a wireless radio subsystem) may be used to send raw video and analytics data to a remote server for storage or for delivery to users directly. Further, the transceiver 206 may be configured to utilize various communication protocols, such as IEEE 802.11 (e.g., Wi-Fi®) and/or various cellular network communication standards and/or protocols (e.g., Long-Term Evolution (LTE), etc.).

The video analysis subsystem 203 may be configured to provide several functions for analyzing the video stream captured by the cameras 212A, 212B. The various functions for analyzing the video stream is used to support one or more applications, such as the parking application, traffic application, or other applications. For example, the video analysis subsystem 203 may include features such as determining occupancy of demarcated parking spaces along the roadway below the pole, determining occupancy of non-demarcated parking areas or no-parking areas below the pole, tracking the arrival or cars to parking spaces and the time that they dwell there, to be used as a time-limited parking enforcement aid, reporting the presence and/or speed of cars in the roadway, reporting pedestrians and/or other objects crossing the roadway, and/or identifying obstructions (e.g., abandoned objects, etc.) in the roadway.

The video compression subsystem 204 may be configured to encode raw video stream data using various compression formats, such as H.264. In some embodiments, the video compression subsystem 204 may generate two compressed streams for each camera 212A, 212B, wherein one compressed stream may be a low-resolution, low frame rate stream that may be displayed for use by authorized individuals in real-time, and the other compressed stream may be a high-resolution, high frame rate stream that may be stored continuously on the device, such as within the storage unit 202. For example, when a high-quality video is required of the scene near a street lamp to which the parking camera device 110 is attached (e.g. when an accident occurs, vandalism, theft, etc.), the high-resolution, high frame rate compressed stream may be retrieved from the parking camera device 110 on-demand.

In various embodiments, the various subsystems supported by the parking camera device 110 (e.g., video analysis subsystem 203, etc.) may be logic, software, circuitry, applications, routines, instructions and/or operations executed by the processor 201, or alternatively may be separate devices, modules, or units configured to perform discrete tasks. In other words, the processor 201 (and its associated elements, such as random access memory (RAM), etc.) may be configured to execute software for performing functionality of the entire system and various subsystems of the parking camera device 110, such as camera subsystem control, analytics, networking, and storage.

In some embodiments, the parking camera device 110 may include various other radios, transceivers, and related components, such as a cellular network modem, subscriber identity modules (SIMs) associated with one or more cellular networks, a Bluetooth radio, etc. In some embodiments, the parking camera device 110 may include a battery (e.g., a rechargeable battery) which may or may not be included within the power interface component 205.

The various components 201-206 may be included within a housing 210 that may be comprised of various segments that each may be metal, plastic, or other similar materials suitable for use in exterior locations. The housing 210 may be configured to be attached to an arm of a streetlight pole, such as via various clamps, screws, straps, and/or other physical attachment devices. In further embodiments, the housing 210 may be attached to a support structure such as a telephone pole or a utility pole, rather than a streetlight pole. Antennas 208A, 208B may be coupled to the housing 210 and connected to the processor 201 and/or the transceiver 206, and may be capable of receiving and transmitting electromagnetic radiation (e.g., signaling). The various components 201-206, the antenna 208A, 208B, and the cameras 212A, 212B may be connected via a bus 211 or other circuitry or connection medium. In some embodiments, the cameras 212A, 212B may be wirelessly connected to the other components of the parking camera device 110, such as via Bluetooth® or other signaling of various communication protocols.

The two cameras 212A, 212B (together referred to as a "camera subsystem") may be paired or otherwise coupled together, and may be connected on an axis at connection points (e.g., pivot points, sliding points) to the bottom of a mounting bracket 215 (or sliding bracket) that is coupled to the housing 210 via a coupling piece 260. The mounting bracket 215 may be one component (e.g., a single, configurable mounting bracket) that is configurable to enable the cameras 212A, 212B to be adjusted in their orientation and/or position with reference to the parking camera device 110. In general, the mounting bracket 215 may be used to align the cameras 212A, 212B by keeping both cameras 212A, 212B centered as the angle between the cameras 212A, 212B is changed. In this way, an overlap area (i.e., of FOVs) may point straight down with respect to the mounting bracket 215, making pointing the pair of cameras 212A, 212B as a single FOV easier. In some embodiments, the cameras 212A, 212B may be connected directly to the housing 210. In various embodiments, the cameras 212A, 212B may each have a shade placed over the camera lens that may block low-angle sunlight and thus reduce glare on the lens cover glass.

The mounting bracket 215 may be a box- like structure that connects with the cameras 212A, 212B such that the cameras 212A, 212B may be partially enclosed by or held within the mounting bracket 215. In some embodiments, in order to rotate, the cameras 212A, 212B may be slid within predefined grooves, slats, or slots within the mounting bracket 215, or alternatively, the cameras 212A, 212B may be pivoted, such as around or on a bolt or axis within the mounting bracket 215. Wiring (e.g., power, communications circuitry, etc.) may also be routed through or otherwise contained within the mounting bracket 215. In various embodiments, the mounting bracket 215 may be connected to the coupling piece 260 on an axis, enabling the mounting bracket 215 to be rotated, thus rotating the cameras 212A, 212B as well. Further, the coupling piece 260 may be connected to the housing 210 on an axis such that the coupling piece 260 may be rotated or otherwise rotated, thus also moving the mounting bracket 215 and the cameras 212A, 212B as well.

In various embodiments, the parking camera device 110 includes the housing 210 and the components within the housing, the camera subsystem, the mounting bracket 215 and the coupling piece 260. Thus, the parking camera device 110 captures the video data with the camera subsystem and then processes the video data. The processing of the video data includes performing video data analysis to support one or more applications.

With such components (e.g., the mounting bracket 215 and the coupling piece 260), the cameras 212A, 212B may be oriented on x-axis, y-axis, and/or z-axis. For example, the cameras 212A, 212B, mounting bracket 215, and/or the coupling piece 260 may each be adjustable so that the cameras 212A, 212B may be aligned, positioned, and/or oriented in three axes at installation time. For example, the cameras 212A, 212B may be rotated on a z-axis within the mounting bracket 215, the mounting bracket 215 may be oriented on an x-axis at a connection to the coupling piece 260, and the coupling piece 260 may be oriented on a y-axis at a connection to the housing 210.

In various embodiments, the cameras 212A, 212B may be pointed and aligned (e.g., with regard to the parking camera device) such that the FOV of one camera 212A may slightly overlap with the FOV of the other camera 212B. Thus, together the cameras 212A, 212B may have a combined FOV that is approximately (e.g., slightly less than) 180 degrees. In some embodiments, the cameras 212A, 212B may be pointed downward such that their respective FOVs may be aligned along a street. In some embodiments, the FOV for each camera 212A, 212B may include one or more parking spaces.

In some embodiments, the cameras 212A, 212B may each be configured to capture imagery at a 16:9 aspect ratio, and further may be paired together to form a wide-angle view with a 32:9 aspect ratio. Each camera 212A, 212B may have a FOV that is slightly less than 90 degrees in width. In some embodiments, a combined FOV of the cameras 212A, 212B may be approximately (e.g., slightly less than) 180 degrees.

In some embodiments, the parking camera device 110 may include a power cord 207 that may be connected to a power interface component 205. Such a power cord 207 may comprise wires, tubing, and/or conduit configured to be connected to various external power sources, such as an AC/DC power outlet and/or any power source associated with a light pole. In various embodiments, the cameras 212A, 212B may be mounted according to various operational specifications and/or objectives. For example, the cameras 212A, 212B may be adjusted (i.e., rotated) at their respective connection points (or pivot points) to the mounting bracket 215 such that the width of their FOV is approximately (e.g., slightly less than) 180 degrees in order to exclude viewing (or capturing video data) of the horizon. Such exclusion of the horizon may be important in preventing the sun from shining directly into the cameras 212A, 212B when the cameras 212A, 212B are aligned in the direction of sunrise or sunset. As another example, the cameras 212A, 212B may be adjusted (i.e., rotated) at their respective connection points (or pivot points) to the mounting bracket 215 such that their FOV is aligned along a street and the cameras 212A, 212B are pointing approximately straight down in order to avoid inadvertent viewing (or capturing video data) of building interiors. This may provide privacy for occupants of buildings along the roadway near the parking camera device 110. As another example, the cameras 212A, 212B may be adjusted (i.e., rotated) at their respective connection points (or pivot points) to the mounting bracket 215 such that their FOV points directly downward. Such downward FOV may provide improved viewpoints for analyzing parallel parking occupancy and traffic, as well as improve video analysis results of captured video data, as an overhead view may minimize obstruction of the FOV by tall vehicles. Further, with such a downward FOV, speed estimation operations performed by the parking camera device 110 based on video data may be more accurate as vehicles moving directly below the cameras 212A, 212B may have the most apparent motion in the image (e.g., a ratio of pixels moved in imagery to distance moved on the ground may be maximized).

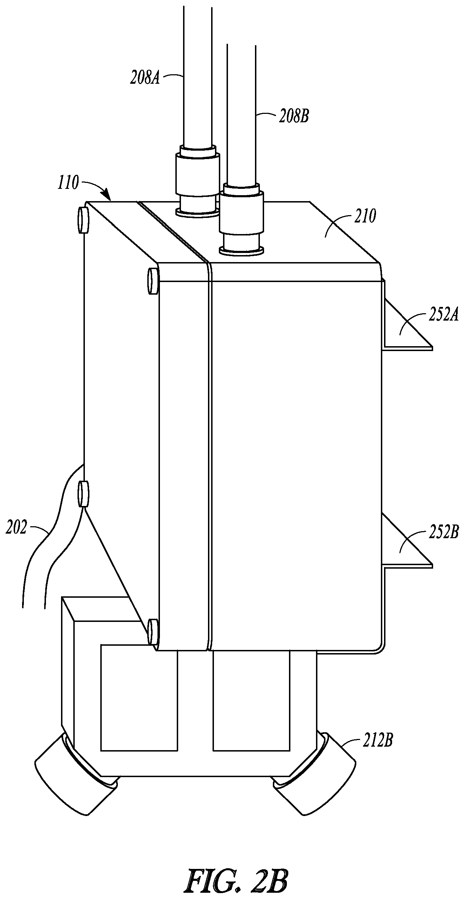

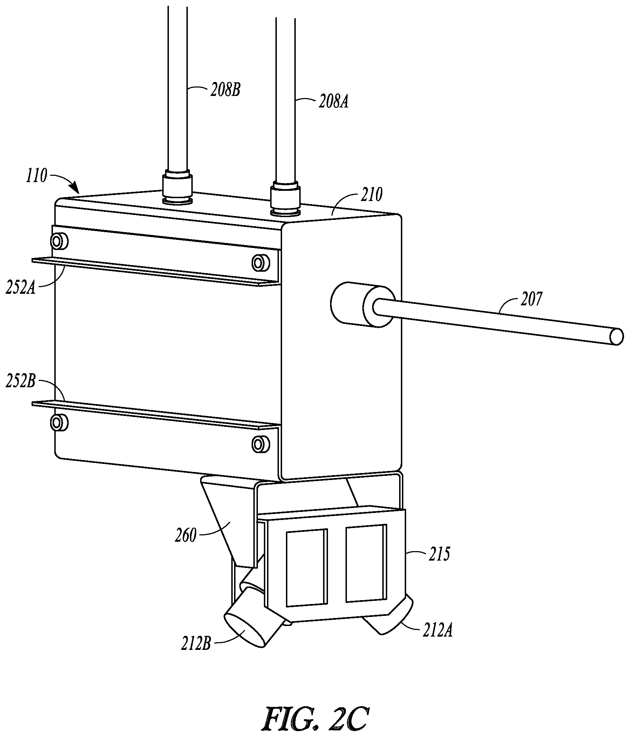

FIG. 2B illustrates a perspective view of an embodiment parking camera device 110. Shown coupled to the back of the housing 210 are rails 252A, 252B that may be used to attach or couple the parking camera device 110 to an installation object, such as the arm of a light pole (or street light). FIG. 2C illustrates another perspective view of an embodiment parking camera device 110.

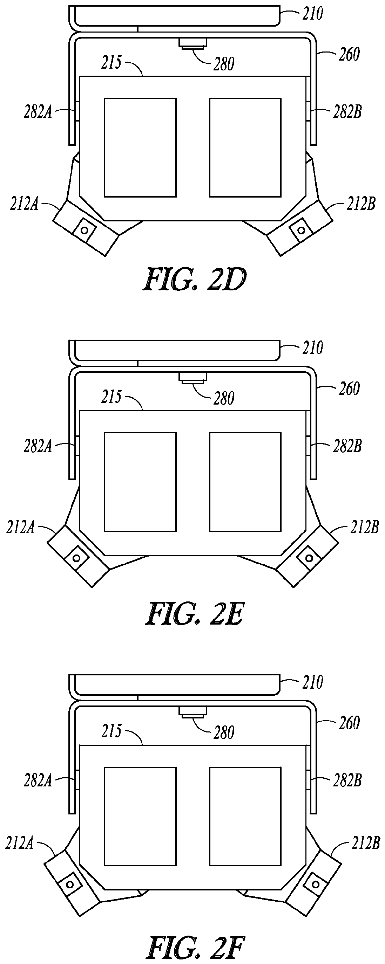

FIGS. 2D-F illustrate orientations of cameras 212A, 212B within an embodiment parking camera device 110. The side views of FIGS. 2D-2F illustrate a connection 280 between the housing 210 and the coupling piece 260, such as an adjustable bolt, pin, or screw. Such a connection 280 may be adjustable to enable the coupling piece 260 to be rotated on a first axis (e.g., a y-axis) as well as be semi-permanently fixed in position. For example, the connection 280 may be loosened to allow an installer to rotate the coupling piece 260 a few degrees and then tightened to keep the coupling piece 260 at that new rotation. The mounting bracket 215 is shown to be connected to the coupling piece 260 at connections 282A, 282B. Such connections 282A, 282B may be adjustable to enable the mounting bracket 215 to be rotated on a second axis (e.g., an x-axis) as well as be semi-permanently fixed in position.

Further, the cameras 212A, 212B may be configurable at their respective connection points (or pivot points) to the mounting bracket 215 as well, enabling the cameras 212A, 212B to be individually rotated on a third axis (e.g., z-axis). For example, the first camera 212A may be rotated a first angle on the z-axis via the first connection point, and the second camera 212B may be rotated a second angle on the z-axis via a configuration of the second connection point. In other words, the cameras 212A, 212B may be rotated (or slid) into different orientations at their respective connection points to the mounting bracket 215. As described above, the mounting bracket 215 (or sliding bracket) may keep both cameras 212A, 212B centered as the angle between the cameras 212A, 212B is changed. In this way, the overlap area of the FOVs of the cameras 212A, 212B may point straight down with respect to the mounting bracket 215, making pointing the pair as a single FOV easier.

Accordingly, FIG. 2D illustrates a first orientation for both the cameras 212A, 212B wherein the cameras are pointed downward at a first angle. FIG. 2E illustrates a second orientation for both the cameras 212A, 212B wherein the cameras are pointed downward but have been rotated outwards to a second angle such that the overlap in the FOV of the cameras 212A, 212B may be less than the overlap when oriented as shown in FIG. 2D. FIG. 2F illustrates a third orientation for both the cameras 212A, 212B wherein the cameras have been rotated outwards to a third angle such that the overlap in the FOV of the cameras 212A, 212B may be less than the overlap when oriented as shown in both FIG. 2D and FIG. 2E.

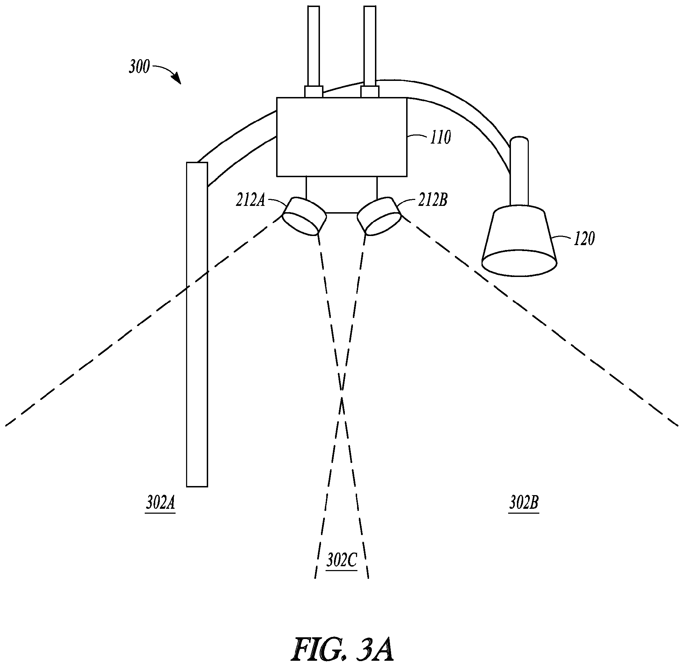

FIG. 3A illustrates a side view diagram 300 of various FOVs 302A, 302B of cameras 212A, 212B of an embodiment parking camera device 110 located on a light pole 120. Based on the adjustment (e.g., orientation in x-axis, y-axis, and/or z-axis, etc.) of the first camera 212A, the parking camera device 110 may receive captured video data from a first FOV 302A, and similarly, based on the adjustment (e.g., orientation in x-axis, y-axis, and/or z-axis, etc.) of the second camera 212B, the parking camera device 110 may receive captured video data from a second FOV 302B. In some embodiments, the FOVs 302A, 302B may each have a width of less than 90 degrees. The first FOV 302A and the second FOV 302B may overlap at an overlap section 302C such that the video data from the first camera 212A includes imagery that is also included within the video data from the second camera 212B. In some embodiments, the combined width of both FOVs 302A, 302B may be approximately (e.g., slightly less than) 180 degrees.

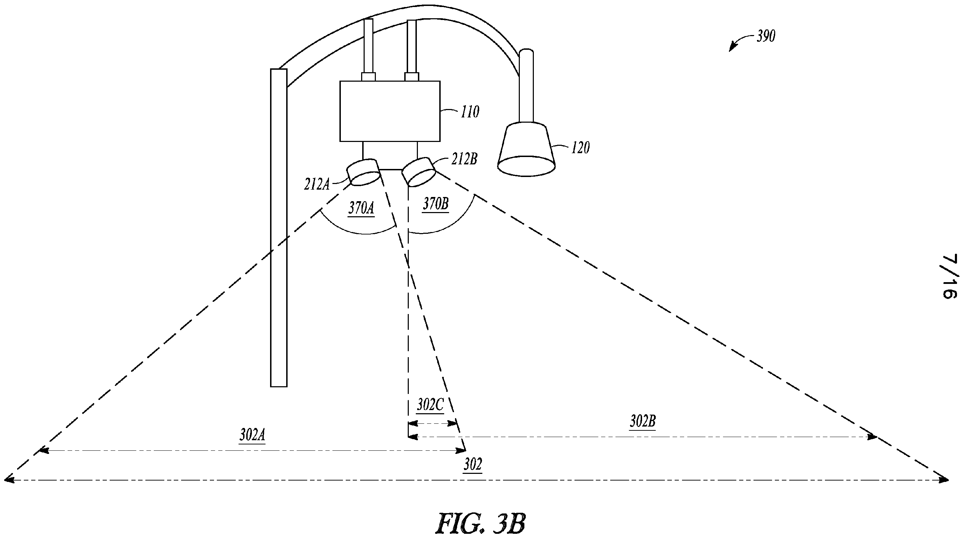

FIG. 3B illustrates a side view diagram of one embodiment of a parking camera device configured to capture an image scene within an area beneath a light pole. In various embodiments, the parking camera device 110 (also referred to as a camera device or a video processing system in example embodiments) includes a pair of cameras 212A and 212B for capturing video data of scenes within the area and then processing the video data captured by the pair of cameras 212A and 212B.

The diagram 390 illustrates a first camera 212A and a second camera 212B each having a 90 degree FOV angle shown by 370A and 370B, respectively. In other embodiments, the angle of the FOV may vary. The FOV angle 370A and the FOV angle 370B together represent a combined FOV angle for the pair of cameras 212A and 212B. In various embodiments, the pair of cameras may be configured such that the combined FOV angle represents a value that is slightly less than the sum of the FOV angles from each of the cameras. For example, the combined FOV angle of FOV angle 370A (e.g., 90 degrees) and FOV angle 370B (e.g., 90 degrees) may be slightly less than 180 degrees.

The FOV angle 370A of the first camera 212A defines the horizontal FOV shown by line 302A. The FOV angle 370B of the second camera 212B defines the horizontal FOV shown by line 302B. The line 302C illustrates the overlapping horizontal FOVs from the first camera 212A and the second camera 212B. The combined horizontal FOV of the cameras 212A and 212B is shown by the line 302.

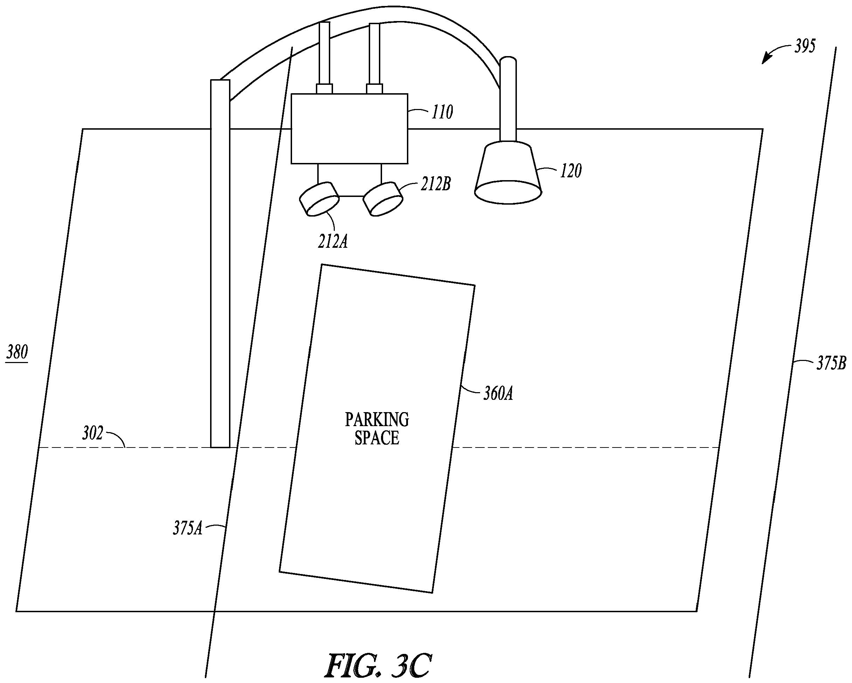

FIG. 3C also illustrates a side view diagram of one embodiment of a parking camera device 110 configured to capture an image scene within an area beneath a light pole. The region 380 represents an area beneath the light pole 110 that is within a FOV of the parking camera device 110. Accordingly, the parking camera device 110 may capture scenes within the region 380. The combined horizontal FOV 302 is also shown. In various embodiments, the combined horizontal FOV 302 represents a width of the region 380. The area between lines 375A and 375B may represent a portion of a roadway near the light pole 120. The portion of the roadway shown in FIG. 3C may include street parking and one or more driving lanes on the roadway. In other embodiments, the parking camera device 110 may be pointed across the street from the light pole, and the region 380 may be located across the street from the light pole.

In other embodiments, the monitoring of parking and traffic is not limited to capturing scenes along a road. For example, the parking camera device 110 may be used to capture video data of scenes in a parking garage or other parking structures.

In various embodiments, the parking camera device 110 may be used to capture video data of scenes that can be analyzed to determine an occupancy of demarcated parking spaces or non-demarcated parking areas along a roadway with the region 380. In other embodiments, the parking camera device 110 may be used to capture video data of scenes that can be analyzed to determine the arrival of cars to the parking spaces, and in some embodiments, the amount of time cars dwell or are parked there. Such tracking information may be used as to aid time-limited parking enforcement.

In other embodiments, the parking camera device 110 may capture video data of scenes that can be analyzed to determine the presence and speed of cars or other vehicles on the roadway. The presence and the speed of cars on the roadway may be reported to authorized users. In further embodiments, the parking camera device 110 may capture video data of scenes that can be analyzed to determine pedestrians or other objects crossing the roadway, which may be reported. In some embodiments, the parking camera device 110 may capture video data of scenes that can be analyzed to identify obstructions, such as abandoned objects, on the roadway. In other embodiments, the video data of the scenes may be analyzed to determine various other conditions or events that occur within the region 380, or in multiple regions similar to region 380 positioned along a roadway. Such conditions or events may not be specific to monitoring traffic or parking.

The video data of scenes captured by the parking camera device 110 represent raw video data in various embodiments that is processed by a computing device or processor housed within the parking camera device 110. The video data processed by the parking camera device 110 may then be transmitted to a service platform (e.g., the remote server 160 shown in FIG. 1) for further processing in some embodiments. The video data transmitted to the service platform may be available to one or more applications associated with the service platform.

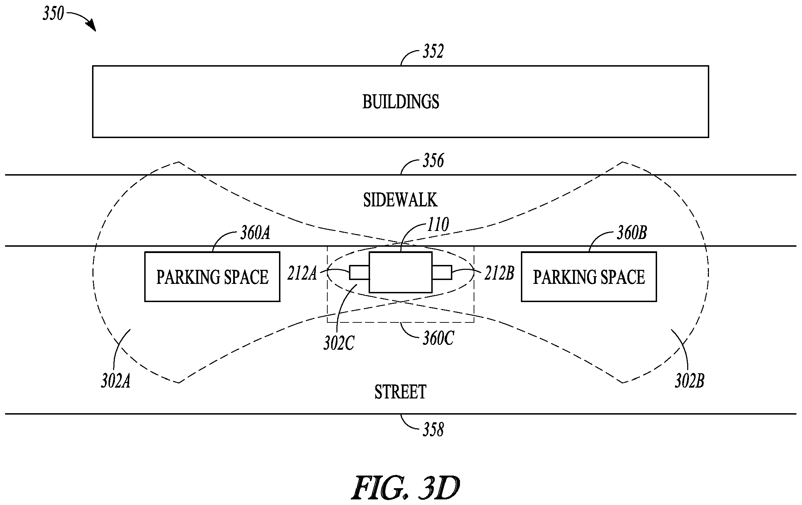

FIG. 3D illustrates a top view diagram 350 of the various fields of view (FOV) 302A, 302B of cameras 212A, 212B of an embodiment parking camera device 110, such as a parking camera device 110 affixed to a light pole (or street light). The diagram 350 is similar to diagram 300 described above, except the diagram 350 shows how the first FOV 302A of the first camera 212A and the second FOV 302B of the second camera 212B may flare-out away from the parking camera device 110, and thus the cameras 212A, 212B may be capable of capturing video data that includes a greater expanse the farther the distance from the parking camera device 110. In some embodiments, each FOV 302A, 302B may include a single parking space 360A, 360B. In other words, the video data captured by the first camera 212A or the second camera 212B may depict imagery of an area of a street 358 below large enough to include a parked vehicle. In some embodiments, the cameras 212A, 212B may be oriented such that their FOVs 302A, 302B may be capable of capturing a single parking space 360C (e.g., a parking space near the center of the parking camera device 110).

In some embodiments, the video data captured by the cameras 212A, 212B may also include imagery other than parking spaces 360A, 360B, such as sections of the street 358 (e.g., the roadway) used by moving vehicles and/or pedestrians, as well as sidewalks 356. In various embodiments, the cameras 212A, 212B may be adjusted (e.g., oriented on x-axis, y-axis, and/or z-axis, etc.) in order to not capture video data of nearby buildings 352. For example, the cameras 212A, 212B may be rotated so that their respective FOVs 302A, 302B do not allow capturing video data of the interiors of the buildings 352, thus maintaining privacy of occupants of the buildings 352.

As described above, the first camera 212A may be mounted to the parking camera device 110 via a mounting bracket 215 that may allow the first camera 212A to be rotated and otherwise positioned to adjust its FOV. Similarly, the second camera 212B may be mounted to the parking camera device 110 via the mounting bracket 215 that may allow the second camera 212B to be rotated and otherwise positioned to adjust its FOV. Such a mounting bracket 215 may comprise screws, knobs, and/or other mechanisms for moving, rotating, loosening, and tightening so that the cameras 212A, 212B are moveable and temporarily set relative to the housing of the parking camera device 110.

Further, each camera 212A, 212B may be fitted with a shade that may act as a shield from sunlight or light being emitted from the luminaire as well as a mask to delimit the exposure of the cameras 212A, 212B.

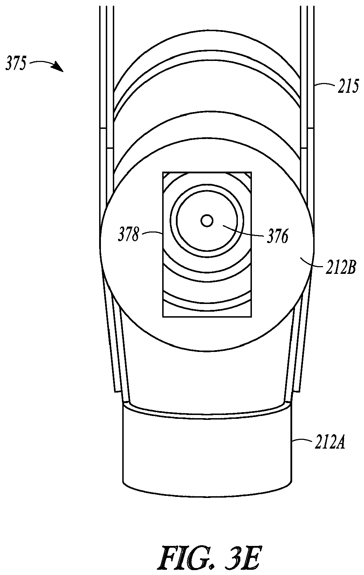

FIG. 3E illustrates a front view of the camera 212B of a parking camera device 110 according to an example embodiment shown in diagram 375. In particular, the shade 378 may be configured to allow the camera lens 376 to capture video imagery in a rectangular aspect ratio, such as a 16:9 aspect ratio or other typical aspect ratios.

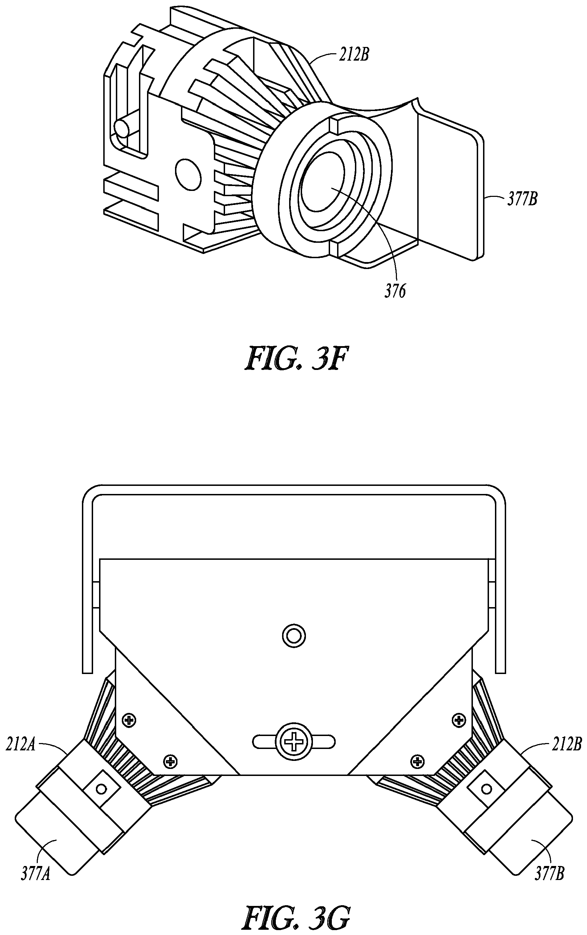

FIG. 3F illustrates a camera 212B (or camera sensor) and a camera lens 376 suitable for use in various embodiments of a parking camera device 110. FIG. 3G illustrates an example embodiment of a parking camera device 110 having a pair of cameras 212A and 212B. The shade 377B is shown in FIG. 3F and the shades 377A and 377B are shown in FIG. 3G for the pair of cameras 212A and 212B.

In an example embodiment, a video processing system coupled to a light pole is described. The video processing system comprising: a pair of cameras coupled to the light pole and facing downward or across a street from the light pole, the pair of cameras are configurable to provide a combined FOV to capture video data of an area beneath the light pole or across the street from the light pole; a transceiver for communications via a network; a memory device for storing instructions; a processor coupled to the pair of cameras, the transceiver, and the memory. The processor, when executing the instructions, causes the video processing system to perform operations comprising: receiving raw video data captured by the pair of cameras; compressing the raw video data into low-resolution video data and high-resolution video data; storing the compressed high-resolution video data locally at the video processing system, the compressed high-resolution information accessible on-demand by authorized users of the service platform for an application; delivering, in real time, the compressed low-resolution video data to a remote computing device via a network; analyzing the raw video data to identify relevant scenes for the application; determining to report a relevant scene identified to authorized users of the service platform for the application; and transmitting information related to the identified relevant scene, via the wireless network, to at least one of the service platform or a user device for utilization by the application.

In another embodiment, the processor, when executing the instructions, causes the video processing system to perform operations further comprising: generating statistic and other information related to activity within the area; and transmitting the statistic and other information, via the network, to the service platform for utilization by the application.

In other embodiments, the processor, when executing the instructions, causes the video processing system to perform operations comprising analyzing the raw video data for reporting causes the video processing system to perform operations further comprises: executing at least one of video data analytics algorithms and recognition algorithms using the raw video data.

In an various embodiment, the processor, when executing the instructions, causes the video processing system to perform operations comprising transmitting the information related to the identified relevant scene, via the network, to at least one of the service platform or the user device for utilization by the application further comprises: transmitting the reporting information to at least one of a parking enforcement agency, police departments, and security agency.

In an example embodiment, the combined FOV limits capturing video data above a horizon above the area beneath the light pole (or across the street from the light pole). In another example embodiment, the combined FOV prevents capturing video data of interiors of a building near the area beneath the light pole (or across the street from the light pole) to provide privacy for occupants of the building. In yet another example embodiment, the combined FOV maintains privacy of individuals located within the area beneath the light pole (or across the street from the light pole) to prevent capturing video data of the individuals that can be used for at least one of face recognition and voice recognition of the individuals.

In other example embodiments, each of the pair of cameras includes a shade to limit capturing over exposed video data by blocking low-angle sunlight that occurs during at least one of sunset and sunrise.

In further embodiments, the video processing system further comprising: a housing for the memory device and the processor, the housing attached to the light pole; a mounting bracket attached to the pair of cameras; a coupling piece attached for attaching the mounting bracket to the housing; wherein the mounting bracket and the coupling piece enables each of the pair of cameras to have its orientation adjusted along the x-axis, the y-axis, and the z-axis while keeping each of the pair of cameras centered.

In some embodiments, the combined FOV represents a single FOV created by slightly overlapping the individual the FOVs from each of the pair of cameras. In another embodiment, each of the pair of cameras has a FOV that is slightly less than 90 degrees such that the combined FOV of the pair of cameras is slightly less than 180 degrees. In yet a further embodiment, the combined FOV represents a wide-angle view with a 32:9 aspect ratio.

In example embodiments, the video processing system represents one of the video processing systems in a network of the video processing systems with at least some of the video processing systems in the network of the video processing systems are coupled to light poles. In some embodiments, the combined FOV to capture video data of the area beneath the light pole overlaps with a second combined FOV to capture data of a second area beneath a second light pole. In other embodiments, the combined FOV to capture video data of the area across the street from the light pole overlaps with a second combined FOV to capture data of a second area across the street from a second light pole.

In another embodiment, the combined FOV to capture video data of the area beneath the light pole (or across the street from the light pole) is large enough to capture an image of a parking space, the parking space representing a demarcated parking space or non-demarcated parking area. In further embodiments, the area beneath the light pole (or across the street from the light pole) is large enough to capture an image of multiple parking spaces or areas.

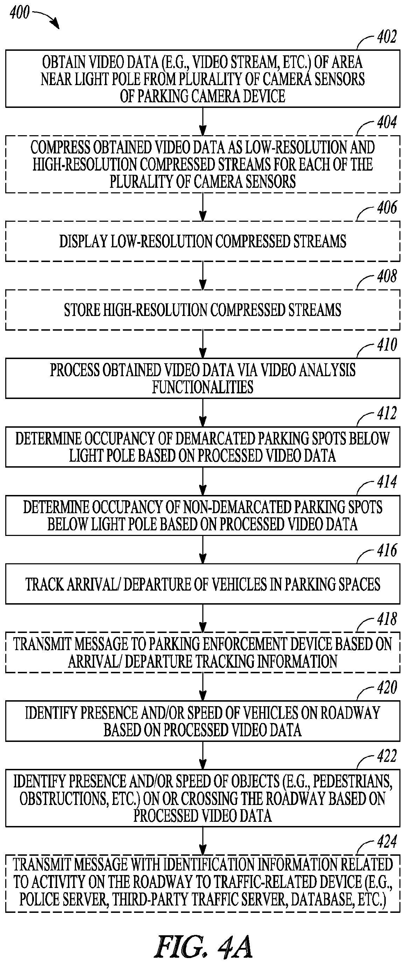

FIG. 4A illustrates a flow diagram 400 for a method performed by a computing device to utilize video data obtained by cameras (or camera sensors) of a parking camera device, such as described above. The operations of the method 400 may be performed by a server, such as a remote server (e.g., the remote server shown in FIG. 1) for receiving data from the parking camera device via the Internet, by the parking camera device itself, or any combination of the remote server and the parking camera device. For example, the processor (e.g., a host processor) of the parking camera device may perform initial image capturing operations and processing (e.g., video data analytics), and a remote server may perform additional processing and analysis on the initially processed data. Various forms of computing devices, including personal computers, servers, parking camera device processors, laptop computers, etc., may be used to implement the embodiment method 400.

In block 402, the processor of the computing device may obtain video data (e.g., video stream, etc.) of an area near a light pole from a plurality of camera sensors of the parking camera device. For example, the computing device may obtain the video data from cameras as they capture the data. As another example, the computing device may obtain the video data from messaging from the parking camera device via the Internet.

In optional block 404, the processor of the computing device may compress the obtained video data as low-resolution and high-resolution compressed streams for each of the plurality of camera sensors. In optional block 406, the processor of the computing device may transmit the low-resolution compressed streams, such as by rendering the low-resolution video streams for display on a screen coupled to the computing device or on a remote screen coupled to the computing device. In optional block 408, the processor of the computing device may store the high-resolution compressed streams, such as by storing the data in a database, non-volatile storage unit or solid state disk, etc.

In an example embodiment, the video compression subsystem takes the raw video data (or raw video stream) and encodes it using H.264 video coding format used for recording, compression, and distribution of video content. The low-resolution video data represents a low frame rate stream. This stream is available by authorized individuals in real-time. The high-resolution video data represents a high frame rate stream. This stream is stored continuously on the device. When a high-quality video of a scene is requested (e.g. when an accident occurs, vandalism, theft) this video can be retrieved from the device (e.g., parking camera device or service platform) on-demand in various embodiments. Thus, the compressed high-resolution video data can be presented to an authorized user via a user device when a request is received to view the high-quality video of a scene.

In block 410, the processor of the computing device may process the obtained video data via video analysis functionalities. In some embodiments, such processing may include various image recognition processing and/or other conventional software/ algorithmic techniques. Examples of such algorithms include various video analytic algorithms that implement object tracking; license plate recognition; dwell and loitering of vehicles and people; vehicle and people counting; speed or movement analysis; queue management analysis; demographics; crime analysis, and facial surveillance. In some embodiments, the processing may be on the high-resolution compressed streams, raw video data, and/or the low-resolution compressed streams.

Based on the processing from the operations of block 410, the computing device may perform one or more of the following operations of blocks 412-424. In block 412, the processor of the computing device may determine an occupancy of demarcated parking spaces below the light pole based on the processed video data. For example, based on the processing, the computing device may determine whether a parking space has a car parked within it or not. The computing device may make such a determination for video data associated with each camera sensor, or alternatively may only evaluate one parking space from a combined feed (or combined FOV) representing imagery from both camera sensors. In block 414, the processor of the computing device may determine an occupancy of non-demarcated parking areas below the light pole based on the processed video data. For example, as non-demarcated parking is general parking that may not be marked (e.g., no "spots"), the parking camera device may report what parts of the area have been filled by cars. The operations in block 414 may be similar to those of block 412, except that the operations in block 414 may address non-parking spot segments of the street or roadway near the parking camera device, such as sidewalk sections, bike lanes, and other traversable sections.

In block 416, the processor of the computing device may track the arrival and/or departure of vehicles in parking spaces, such as the parking spaces directly under the light pole (or across the street from the light pole) and/or parking spaces down the street and within the FOV of the camera sensors of the parking camera device. In example embodiment, tracking the arrival and/or departure of vehicles in parking spaces includes tracking the arrival and departure times. In optional block 418, the processor of the computing device may transmit (or report) a message to a parking enforcement device based on the arrival and/or departure tracking information generated in block 416. In some embodiments, the arrival and/or departure times are reported along with identification information of the car, such as the license plate for the car. For example, based on identifying a car has left a parking space near the parking camera device, the computing device may transmit an email, a proprietary message, and/or a short-message-service (SMS) text message to a computing device associated with a parking management service, a police department, and/or a user of a service (e.g., an individual user with a smartphone app for locating parking spaces, etc.).

In block 420, the processor of the computing device may identify a presence and/or a speed of vehicle(s) on the roadway based on the processed video data. For example, the computing device may detect moving cars, trucks, street sweeper vehicles, bikes, and/or other conveyances that are moving around the parking camera device. In some embodiments, video analytics using object tracking may be used to detect the moving vehicles. Similar, in block 422, the processor of the computing device may identify a presence and/or a speed of objects (e.g., pedestrians, obstructions, etc.) that are on and/or that are crossing the roadway based on processed video data. For example, the computing device may detect a person walking off of a sidewalk into the street underneath the parking camera device based on the video data from one or more of the camera sensors. In block 424, the processor of the computing device may transmit (or report) a message with identification information related to the activity on the roadway to a traffic-related device, such as a police department or traffic department server, third-party traffic server, a database, etc. Transmitting such a message may be similar to as described above with reference to optional block 418, and may include various communication mediums, such as email.

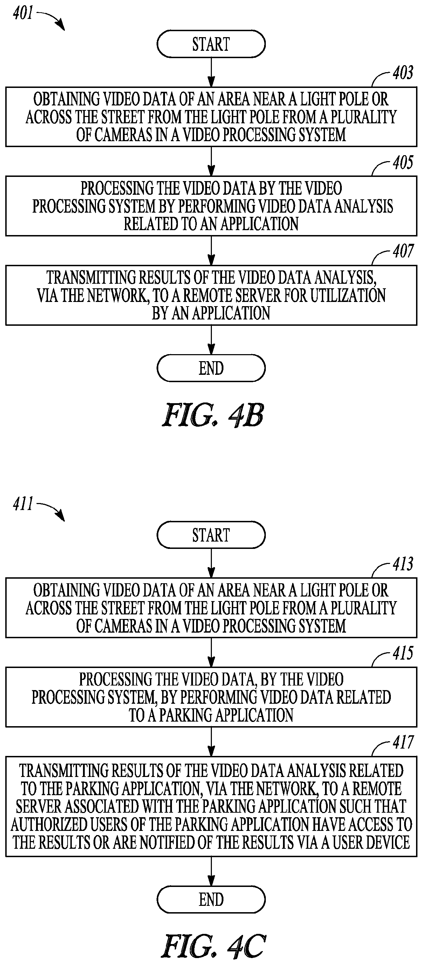

FIG. 4B illustrates a method 401 for a video processing system to utilize video data obtained by a plurality of cameras from the video processing system, according to an example embodiment. In one embodiment, the video processing system represents a parking camera device attached to a light pole and configured in the manner described in FIGS. 2A-2F. However, it should be noted that the parking camera device is not limited to obtaining and processing parking information analysis from video data of scenes, e.g., occupancy of parking spaces, and the arrival and departure of vehicles to and from the parking spaces, respectively.

In various embodiments, the video processing system represents a node within a lighting network such as a gateway node platform. In other embodiments, one or more of the operations in method 401 may be performed by a remote server such as a service platform which is associated with one or more applications. The gateway node platform and the service platform may be included within a lighting infrastructure application framework (LIAF).

The method 401 includes the operations 403, 405, and 407 performed by a video processing system. At operation 403, video data of an area near a light pole or across a street from the light pole is obtained from a plurality of cameras in a video processing system.

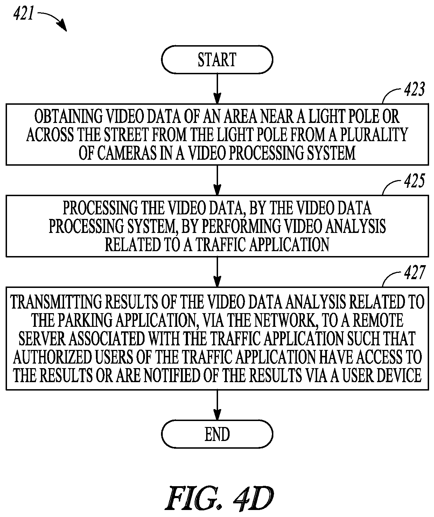

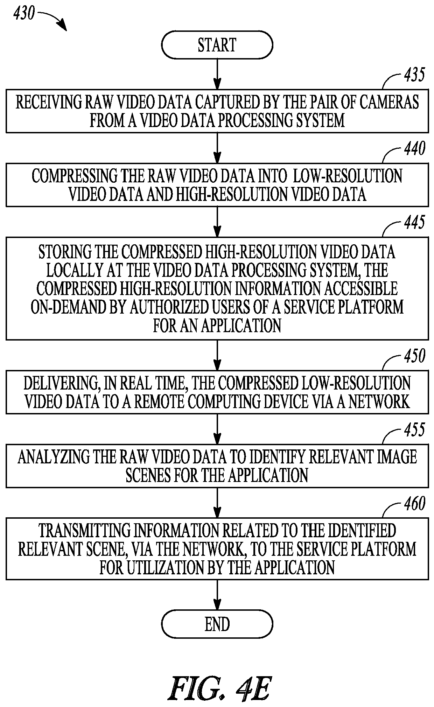

At operation 405, the video data is processed by the video processing system by performing video data analysis related to an application. In an example embodiment, the video analysis subsystem 203 performs the video analytics or video data analysis. In various embodiment, the video analysis, which is performed by the parking camera device (or video processing system) alone or in combination with a remote computing device, allows users to capture, index, track and monitor types and speed of vehicles, parking spaces, people and objects, colors, and more. For example, the video analysis of the various image scenes may implement object tracking; license plate recognition; dwell and loitering of vehicles and people; vehicle and people counting; speed or movement analysis; queue management analysis; demographics; and facial surveillance. The examples of video data analysis described above may be used to help monitor parking spaces, traffic, and other conditions and scenes along a roadway, sideway, or within the FOV of the parking camera device. The various types of video analytics described above may also be used by the methods 411, 421, and 430 described in FIGs. 4C, 4D, and 4E respectively.

In various embodiments, the video analytics is performed by the parking camera devices attached to the light poles (or other mounting structure) where the actual data is being captured. By performing video analytics by the parking camera devices, the results of the analytics data can transmitted rather than the raw data (or compressed raw data) as needed to authorized users. Although the raw data (e.g., compressed low-resolution and high-resolution data) is accessible to users, as needed, the results of the video analytics data can provide immediate and useful results that support one or more applications to various authorized users. By leveraging analytics rather than human-monitored surveillance, potential incidents occurring in various areas (which may be referred to as designated 'hot zones') can be reported in real time to alert security officials and improve responsiveness without the need for people to monitor or watch video feeds.

In example embodiments, the results of the video analytics may be transmitted and displayed on user devices (or remote devices), or reported to various authorized user of the video analytics data. The results of the video analytics may provide useful insights to authorized users, for example, the results of the video analytics may be used to recognize threats based on triggers using facial surveillance, advanced object tracking and license plate recognition. In certain circumstances, the results from the video analytics may be used to reduce investigation time with a centralized, searchable database (e.g., by a service platform and associated applications) that includes crime investigation analytics.

At operation 407, the results of the video data analysis is transmitted, via the network, to a remote server for utilization by an application.

In one example embodiment, the application represents a parking application, such as the example shown in FIG. 4C. In another example embodiment, the application represents a traffic monitoring application, such as the example shown in FIG. 4D. In further embodiments, the application represents other types of applications that utilizes information from video data captured by the camera device. Although the camera device is shown to be attached to a light pole (e.g., as shown in FIG. 1 and FIGS. 3A-3F), in alternative embodiments, the camera device may be attached to other types of support structures, for example, utility poles (such as power line poles, telephone line poles, etc.) or street lights.

In some embodiments, the results of the video analysis transmitted to the remote server is further processed (e.g., performing analysis functionalities associated with an application) by the remote server before being accessed by an authorized user of the application. In other embodiments, the video processing system represents a remote server that obtains raw video data for performing analytics. In other words, the video data analysis functions may be performed by the video processing system (coupled to the light pole or other support structure), by the remote server communicatively coupled to the video processing system via a network, or by a combination of the video processing system and the remote server. In various embodiments, the remote server may perform additional video data analysis using the video data (processed or not processed by the individual video processing systems) by multiple video processing systems such that the results of the video data captured by the individual camera devices may be aggregated.

FIG. 4C illustrates a method 411 for a video processing system that utilizes video data obtained by a plurality of cameras from the video processing system in a parking application, according to an example embodiment. In one embodiment, the video processing system represents a parking camera device attached to a light pole and configured in the manner described in FIGS. 2A-2F, or by some other support structure that the video processing system can be attached to for capturing video data. In other embodiments, one or more of the operations in method 411 may be performed by a remote server (e.g., a remote server 170) such as a service platform.

The method 411 includes the operations 413, 415, and 417 performed by a video processing system. At operation 413, video data of an area near a light pole or across the street from the light pole is obtained from a plurality of cameras in a video processing system. The cameras in the video processing system is configure to capture video data of in a region or area below the light pole, or other support structure, that includes parking spaces.

At operation 415, the video data is processed by the video processing system by performing video analysis related to a parking application. In some embodiments, the video data of are analyzed to determine occupancy of parking spaces, and the arrival and departure of vehicles to and from the parking spaces, respectively. In some embodiments, the result of the video data analysis includes information related to the occupancy of parking spaces and how long cars are parked in one or more parking spaces. In an example embodiment, the results of the video data analysis that is reported includes the real-world coordinates (latitude and longitude) and a bounding box of the parking areas(s) seen or captured by the parking camera device. In further embodiments, the results of the video data analysis includes tracking information related to the arrival and departure of vehicles in the parking spaces. In the method 400 shown in FIG. 4A, operations 412, 414, and 416 illustrate examples of operations used to perform video data analysis. In an example embodiment, the video analysis subsystem 203 performs the video analytics or video data analysis.

At operation 417, the results of the video data analysis is transmitted, via the network, to a remote server for utilization by the parking application. In other embodiments, the raw video data, or partially processed video data is further processed by the remote server before the information is utilized by the parking application. The results of the video data analysis may be presented or accessed by a user via a user device, such as a mobile device, desktop device or other computing device. For example, a message may be transmitted to a parking enforcement device based on the arrival/departure tracking information (e.g., operation 416 shown in FIG. 4A).

FIG. 4D illustrates a method 421 for a video processing system that utilizes video data obtained by a plurality of cameras from the video processing system in a parking application, according to an example embodiment. In one embodiment, the video processing system represents a parking camera device attached to a light pole and configured in the manner described in FIGS. 2A-2F, or by some other support structure that that camera device can be attached to for capturing video data of. In other embodiments, one or more of the operations in method 421 may be performed by a remote server such as a service platform.

The method 421 includes the operations 423, 425, and 427 performed by a video processing system. At operation 423, video data of an area near a light pole or across the street from the light pole is obtained from a plurality of cameras in a video processing system. The cameras in the video processing system is configure to capture video data of in a region or area below the light pole, or other support structure, that includes parking spaces.

At operation 425, the video data is processed by the video processing system by performing video analysis related to a traffic application. In some embodiments, the video data of are analyzed to identify the presence and/or speed of vehicles on a roadway. In other embodiments, the video data of are analyzed to identify the presence and/or speed of objects or pedestrians crossing the roadway. In some embodiments, the result of the video data analysis includes information related to the occupancy of parking spaces and how long cars are parked in one or more parking spaces. In further embodiments, the results of the video data analysis includes tracking information related to the arrival and departure of vehicles in the parking spaces. In the method 400 shown in FIG. 4A, operations 420 and 422 illustrate examples of operations used to perform video data analysis. In an example embodiment, the video analysis subsystem 203 performs the video analytics or video data analysis.

At operation 427, the results of the video data analysis is transmitted, via the network, to a remote server for utilization by the traffic application. In other embodiments, the raw video data, or partially processed video data is further processed by the remote server before the information is utilized by the traffic application. The results of the video data analysis may be presented or accessed by a user via a user device, such as a mobile device, desktop device or other computing device. For example, a message may be transmitted with identification information related to activity on the roadway (e.g., operation 424 shown in FIG. 4A).

FIG. 4E illustrates a method 430 for a computing device to utilize video data obtained by cameras in a video processing system, according to another embodiment. In one embodiment, the video processing system represents a parking camera device attached to a light pole and configured in the manner described in FIGS. 2A-2F, or by some other support structure that that camera device can be attached to for capturing video data of.

The method 430 includes the operations 435, 440, 445, 450, 455, 460, and 465 performed by a video processing system. In other embodiments, one or more of the operations in method 430 may be performed by a service platform. At operation 435, raw video data captured by the pair of cameras from a video processing system is received by the video processing system. The cameras in the video processing system is configure to capture video data of in a region or area below the light pole, or other support structure, that includes parking spaces.

At operation 440, the raw video data is compressed into low-resolution video data and high-resolution video data. In an example embodiment, the video compression subsystem takes the raw video data (or raw video stream) and encodes it using H.264 video coding format used for recording, compression, and distribution of video content. The low-resolution video data represents a low frame rate stream. This stream is available by authorized individuals in real-time. The high-resolution video data represents a high frame rate stream. This stream is stored continuously on the device. When a high-quality video of a scene is required (e.g. when an accident occurs, vandalism, theft) this video can be retrieved from the device on-demand in various embodiments. Thus, the compressed high-resolution video data can be presented to an authorized user via a user device when a request is received to view the high-quality video of a scene.

At operation 445, the compressed high-resolution video data is stored locally at the video processing system, the compressed high-resolution data accessible on-demand by authorized users of a service platform for an application. In an example embodiment, a solid state disk is used to store high-quality video continuously. In further embodiments, the solid state disk is used to cache video analytics data when a network is not available to transmit the information to a remote device, such a user device or a remote server (e.g., a service platform). The authorized users may view the compressed high-resolution video data via a user device, a parking enforcement device, a traffic-related device, a client device or other device suitable for viewing the compresses high-resolution video data. In some embodiments, the storage unit 202 is used to store the compressed high-resolution information locally.

At operation 450, the compressed low-resolution video data is delivered, in real time, to a remote computing device via a network. The remote computing device may represent a user device such as a parking enforcement device or a traffic-related device, or other device suitable for viewing the compressed low-resolution video data. In some embodiments, the remote computing device is a remote server such as a service platform. In some embodiments, the compressed low-resolution video data represents media content presented to a user via live streaming. In various embodiments, the media content (e.g., the compressed low-resolution video data) is delivered over the Internet. In some embodiments, the video processing system represents the media source (e.g. video cameras) and encodes the media content to digitize the content. In example embodiments, the encoded media content is published and delivered by the service platform for utilization by one or more application and presentation to users.

The method described in the flow diagram 430 may be used to provide situational awareness of safety events by combining the high-speed wireless communications with distributed digital video recording (DVR) like video buffering, allowing officials (and other users) to view real-time alert streams as well as full-resolution video clips just prior to incidents. This approach can minimize danger to first responders. In various embodiments, the high-resolution video data represents the full-resolution video clips from a video camera, and the low-resolution video data represents partial-resolution video clips from a video camera.

Furthermore, the method described in the flow diagram 430 may provide a privacy-enabled solution. For example, video archival application programming interfaces (APIs) may be provided (e.g., by the service platform or the video processing system) that allows data owners to retrieve video data/stream buffers from the distributed video system (e.g., one or more the video processing systems, the service platform (also referred to as remote server), or a combination video processing systems and a service platform) and save or organize them for future forensic analysis, or to destroy them in compliance with their own organization's privacy policy.

At operation 455, the raw video data is analyzed to identify relevant video data (e.g., video data of relevant scenes) for the application. In an example embodiment, the video analysis subsystem 203 performs the video analytics or video data analysis. The relevant video data of may correspond to scenes (captured within the area defined by the FOV) that indicate that occurrence of certain types of events occurring at the road way or sidewalk, for example when an accident occurs, vandalism, and theft, etc. In some embodiments, the relevant video data of may include video data of cars arriving and departing from parking spaces or other information related to the occupancy of the parking spaces (e.g., demarcated parking spaces or non-demarcated parking areas). In other embodiments, the relevant video data of include cars speeding on the roadway. In further embodiments, the relevant video data of may include pedestrians or other objects crossing the roadway. In yet other embodiments, the relevant video data of include the obstruction of objects on the roadway. The types of relevant video data of described above illustrate a few examples and the types of relevant video data of are not limited to the example embodiments describe above. In various embodiments, the types of relevant video data of may be defined by one or more applications, such as parking applications, traffic applications and crime detection applications. In addition to identifying the relevant video data of, information associated with the relevant video data of may be generated or produced based on the relevant video data of, or extracted from the relevant video data of.

At operation 460, transmitting information related to the identified relevant scene, via the network, to the service platform for utilization by the application. In various embodiments, the information related to the relevant scenes may include parking information, traffic information, pedestrian information, vehicle information, driver information, or other types of information produced by the video analytics or video data analysis. The information related to the identified relevant scene may be transmitted via a wireless radio subsystem, such as a wireless communication transceiver 206 (or radio) shown in FIG. 2A. The wireless radio subsystem or radio provides network connectivity to the video processing system. In various embodiments, the network (e.g., shown in FIG. 1) is used to send raw video data and processed video analytics data to a server for storage, or to users directly. In example embodiments, the IEEE 802.11 specification (Wi-Fi) may be used to implement wireless local area network (WLAN) computer communications, or cellular radios can be used to transmit data.

In an example embodiment, a method of processing video data at a computing device including a pair of cameras coupled to a light pole and facing downward or across a street from the light pole is described. The pair of cameras is configurable to provide a combined FOV to capture video data of an area beneath the light pole (or across the street from the light pole). The method comprising: receiving raw video data captured by the pair of cameras; compressing, using a processor of the computing device, the raw video data into low-resolution video data and high-resolution video data; storing the compressed high-resolution video data locally at the video processing system, the compressed high-resolution information accessible on-demand by authorized users of the service platform for an application; delivering, in real time, the compressed low-resolution video data to a remote computing device via a network; analyzing, using the processor of the computing device, the raw video data to identify relevant scenes for the application; determining to report a relevant scene identified to authorized users of the service platform for the application; and transmitting information related to the identified relevant scene, via the network, to the service platform for utilization by the application.

In a further embodiment, the method comprising: receiving a request from the service platform, via the network, to access data stored at the system for the compressed high-resolution video data related to the identified relevant scenes; accessing the compressed high-resolution video data related the identified relevant scenes; and transmitting, to the service platform via the network, the compressed high-resolution video data related to the identified relevant scenes.

In some embodiments, the operation of analyzing, using the processor of the computing device, the raw video data to identify the relevant scenes for the application further comprises: generating statistics and other information using the raw video data related to activity within the area beneath the light pole (or across the street from the light pole); and transmitting, to the service platform via that network, the generated statistics and other information for utilization by the application.

In other embodiments, the operation of analyzing, using the processor of the computing device, the raw video data to identify the relevant scenes for the application further comprises: executing at least one of video data analytics algorithms and recognition algorithms using the raw video data.

In another embodiment, the operation of transmitting the information related to the identified relevant scene, via the network, to the service platform for utilization by the application further comprises: transmitting the reporting information to at least one of a parking enforcement agency, police departments, and security agency.

In yet another embodiment, the operation of receiving the raw video data captured by the pair of cameras comprises: combining individual data feeds from the video data captured by each of the pair of cameras into a combined data feed for the video data captured by the pair of cameras.

In example embodiments, the application represents at least one of a roadway parking application and a traffic analysis application. In some example embodiments, the service platform comprises at least one server that enables the application to access the information transmitted by the system. In other example embodiments, the service platform performs additional processing of the information transmitted by the system.

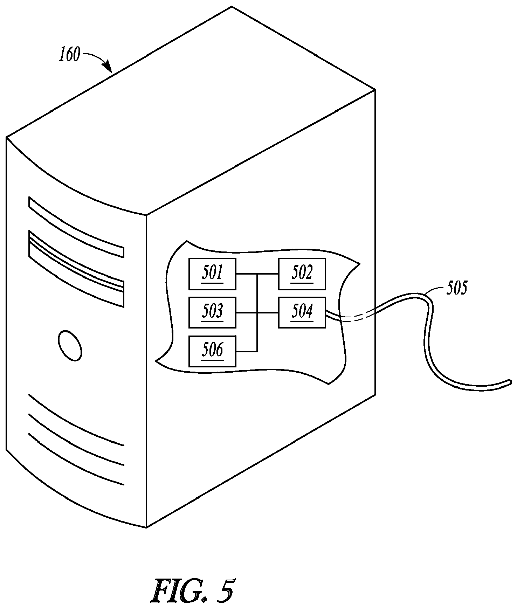

Some embodiments may utilize any of a variety of commercially available computing devices, such as the server computing device 160 illustrated in FIG. 5. Such a server computing device 160 may typically include a processor 501 coupled to memory 502 and a large capacity nonvolatile memory, such as a disk drive 503. The server computing device 160 may also include a floppy disc drive, compact disc (CD) or DVD disc drive 506 coupled to the processor 501. The server computing device 160 may also include network access ports 504 and/or connections 505 coupled to the processor 501 for establishing data connections with a network, such as a local area network (LAN) coupled to other system computers and servers or a wide area network (WAN), such as the Internet.

Various embodiments provide methods, devices, systems, and machine-readable storage medium for utilizing video data obtained by cameras of a parking camera device (or video processing system). An embodiment parking camera device coupled to a light pole may include a processor configured to execute various processor-executable instructions, a memory configured to store data related to video data and coupled to the processor, a transceiver for wireless communications via a wireless network, coupled to the processor, and a plurality of cameras paired together and configured to capture video data, wherein each of the plurality of cameras may be coupled to the processor and configured with a shade. Each camera of the plurality of cameras may utilize a configurable orientation on a plurality of axes. In this way, each of the plurality of cameras may be oriented such that it may record video data that may be used for both analyzing traffic and parking along an area (e.g., a roadway). The FOV of each camera may be limited by the orientation of each camera.

In some embodiments, the parking camera device may further include a video analysis subsystem configured to analyze video data captured by the plurality of cameras, and a video compression subsystem configured to encode the captured video data for one or more of local storage and network streaming to a remote device, wherein the video analysis subsystem and the video compression subsystem are executed by the processor. In some embodiments, the transceiver may be configured to exchange the wireless communications via at least one of a wireless local area network and a cellular wide area network.

In some embodiments, each of the plurality of cameras may have a 16:9 aspect ratio. In some embodiments, the plurality of cameras may be paired together to form a wide-angle view with a 32:9 aspect ratio. In some embodiments, each of the plurality of cameras may have a FOV that may be approximately 90 degrees (e.g., slightly less than 90 degrees). In some embodiments, each of the plurality of cameras may have a FOV that overlaps with another FOV of another of the plurality of cameras. In some embodiments, a combined field of field of the plurality of cameras may be approximately (e.g., slightly less than) 180 degrees. In some embodiments, each of the plurality of cameras may be pointed downward such that each has a FOV that may be aligned along a section of a street below the light pole and that may be slightly overlapping with a FOV of another camera such that the area directly under the pole is visible to the plurality of cameras. In some embodiments, a lighting pattern of a street lamp and the FOV of the plurality of cameras may be matched.

An embodiment method, performed by a processor of a computing device, may include operations to utilize video data obtained by cameras of a parking camera device, the operations including obtaining video data of an area near a light pole from a plurality of cameras of parking camera device positioned on the light pole, processing the obtained video data via video analysis functionalities, and performing one or more of the following operations based on the processed video data: determining an occupancy of demarcated parking spaces below the light pole based on the processed video data, determining an occupancy of non-demarcated parking areas below the light pole (or across the street) based on the processed video data, tracking at least one of an arrival and a departure of a vehicle in a parking space below the light pole, identifying at least one of a presence and a speed of a vehicle on a roadway based on the processed video data, and identifying at least one of a presence and a speed of an object that is on or crossing the roadway based on the processed video data (e.g., detecting a stopped vehicle on the roadway, an object obstructing the roadway, etc.). In some embodiments, the method may further include transmitting a first message to parking enforcement device based on the tracking information, and transmitting a second message with identification information related to activity on the roadway to traffic-related device.

In some embodiments, the method may further include compressing the obtained video data as low-resolution and high-resolution compressed streams for each of the plurality of camera sensors, and storing the high-resolution compressed streams. In some embodiments, the method may further include transmitting the low-resolution compressed streams for display on a remote device.

In some embodiments, the computing device may be a remote server. In some embodiments, obtaining the video data of the area near a light pole from a plurality of cameras of parking camera device positioned on the light pole may include receiving the video data from the parking camera device via the Internet. In some embodiments, the computing device is the parking camera device.

In some embodiments, transmitting the first message or the second message may include transmitting a third message to a third-party computing device, wherein the third-party computing device is associated with a parking enforcement entity, the police, or an individual user.

An embodiment system may include a parking camera device, comprising a first processor configured to execute various processor-executable instructions, a memory configured to store data related to video data and coupled to the first processor, a transceiver for wireless communications via a network, coupled to the first processor, and a plurality of cameras paired together and configured to capture video data coupled to the first processor, wherein each of the plurality of cameras is configured with a shade and may be coupled to the parking camera device such that each camera has a configurable orientation on a plurality of axes (e.g., each camera is adjustable in a mounting bracket such that each camera may be aligned to have a FOV that is slightly overlapping with other cameras' fields of view before installation at a parking area location, and during installation, the cameras may be adjusted via the mounting bracket in three axes), the system further comprising a remote server comprising a second processor and a network interface for exchanging communications via the network, wherein the first processor is configured with processor-executable instructions to perform various steps of the above described embodiment method, and wherein the second processor is configured with processor-executable instructions to perform various steps of the above-described embodiment method. In some embodiments individual fields of view for the plurality of cameras may be aligned and the relative camera positions may be secured as a set. Further, the plurality of cameras may be aimed as a single FOV.

Further embodiments include a computing device configured with processor-executable instructions for performing operations of the methods described above. Further embodiments include machine-readable storage medium on which is stored processor-executable instructions configured to cause a computing device to perform operations of the methods described above.

The various processors described herein may be any programmable microprocessor, microcomputer or multiple processor chip or chips that can be configured by software instructions (applications) to perform a variety of functions, including the functions of the various embodiments described herein. In the various devices, multiple processors may be provided, such as one processor dedicated to wireless communication functions and one processor dedicated to running other applications. Typically, software applications may be stored in internal memory before they are accessed and loaded into the processors. The processors may include internal memory sufficient to store the application software instructions. In many devices the internal memory may be a volatile or nonvolatile memory, such as flash memory, or a mixture of both. For the purposes of this description, a general reference to memory refers to memory accessible by the processors including internal memory or removable memory plugged into the various devices and memory within the processors.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary embodiments, the functions described may be implemented in hardware, software, firmware, or any combination thereof. If implemented in software, the functions may be stored on or transmitted over as one or more instructions or code on a machine-readable storage medium (e.g., non-transitory machine-readable storage medium). The steps of a method or algorithm disclosed herein may be embodied in a processor-executable software module or processor-executable software instructions which may reside on a non-transitory computer-readable storage medium, a non-transitory server-readable storage medium, and/or a non-transitory processor-readable storage medium. In various embodiments, such instructions may be stored processor-executable instructions or stored processor-executable software instructions. Tangible, non-transitory computer-readable storage media may be any available media that may be accessed by a computer. By way of example, and not limitation, such non-transitory computer-readable media may comprise RAM, ROM, EEPROM, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of non-transitory computer-readable medium. Additionally, the operations of a method or algorithm may reside as one or any combination or set of codes and/or instructions on a tangible, non-transitory processor-readable storage medium and/or computer-readable medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the appended claims. Thus, the present invention is not intended to be limited to the embodiments shown herein but is to be accorded the widest scope consistent with the following claims.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the claims.

Although an overview of the inventive subject matter has been described with reference to specific example embodiments, various modifications and changes may be made to these embodiments without departing from the broader scope of the present claims. Such embodiments of the inventive subject matter may be referred to herein, individually or collectively, by the term "invention" merely for convenience and without intending to voluntarily limit the scope of this application to any single disclosure or inventive concept if more than one is, in fact, disclosed.

The embodiments illustrated herein are described in sufficient detail to enable those skilled in the art to practice the teachings disclosed. Other embodiments may be used and derived therefrom, such that structural and logical substitutions and changes may be made without departing from the scope of the appended claims. The Detailed Description, therefore, is not to be taken in a limiting sense, and the scope of various embodiments is defined only by the appended claims.

As used herein, the term "or" may be construed in either an inclusive or exclusive sense. Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments of the present disclosure. In general, structures and functionality presented as separate resources in the example configurations may be implemented as a combined structure or resource. Similarly, structures and functionality presented as a single resource may be implemented as separate resources. These and other variations, modifications, additions, and improvements fall within a scope of embodiments of the present disclosure as represented by the appended claims. The specification and drawings are, accordingly, to be regarded in an illustrative rather than a restrictive sense.

## Claims

1. A video processing system coupled to a light pole (120), comprising:
a pair of cameras (212A, 212B) coupled to the light pole (120) and facing downward or across a street from the light pole (120), the pair of cameras (212A, 212B) are configurable to provide a combined field of view to capture video data of an area beneath the light pole (120) or across the street from the light pole (120);
a transceiver (206) for communications via a wireless network with a remote server such as a service platform associated with one or more applications (130, 140);
a memory device (202) for storing instructions;
a processor (201) coupled to the pair of cameras (212A, 212B), the transceiver (206), and the memory (202), wherein the processor (201) is configured to execute the instructions to cause the video processing system to perform operations comprising:
receiving raw video data captured by the pair of cameras (212A, 212B);
compressing the raw video data into low-resolution video data and high-resolution video data;
storing the compressed high-resolution video data locally at the video processing system, the compressed high-resolution video data being accessible on-demand by authorized users of the service platform associated with an application;
delivering, in real time, the compressed low-resolution video data to a remote computing device (170) via the wireless network (130, 140);
analyzing the raw video data to identify relevant scenes for the application;
determining to report a relevant scene identified to authorized users of the service platform associated with the application;
transmitting information related to the identified relevant scene, via the wireless network, to at least one of the service platform or a user device for utilization by the application;
receiving a request from the service platform, via the wireless network (130, 140), to access data stored at the system for the compressed high-resolution video data related to the identified relevant scenes;
accessing the compressed high-resolution video data related the identified relevant scenes; and
transmitting, to the service platform via the wireless network (130, 140),
the compressed high-resolution video data related to the identified relevant scenes

2. The video processing system of claim 1, wherein the processor (201), when executing the instructions, causes the video processing system to perform operations further comprising:
generating statistic and other information related to activity within the area; and
transmitting the statistic and other information, via the wireless network (130, 140), to the service platform for utilization by the application.

3. The video processing system of claim 1, wherein the processor (201), when executing the instructions, causes the video processing system to perform operations comprising analyzing the raw video data for reporting causes the video processing system to perform operations further comprising:
executing a video analytics algorithms using the raw video data.

4. The video processing system of claim 1, wherein the processor (201), when executing the instructions, causes the video processing system to perform operations comprising transmitting the information related to the identified relevant scene, via the wireless network (130, 140), to at least one of the service platform or a user device for utilization by the application further comprising:
transmitting reporting information to at least one of a parking enforcement agency, police departments, and security agency.

5. The video processing system of claim 1, wherein the processor (201), when executing the instructions, causes the video processing system to perform operations of analyzing the raw video data for reporting causes the video processing system to perform operations further comprising:
determining occupancy of a parking space beneath the light pole (120) or across the street from the light pole (120) within the area.

6. The video processing system of claim 1, wherein the processor (201), when executing the instructions, causes the video processing system to perform operations of analyzing the raw video data for reporting causes the video processing system to perform operations further comprising:
determining at least one of arrival and departure of a vehicle in the parking space within the area beneath the light pole (120).

7. The video processing system of claim 1, wherein the processor (201), when executing the instructions, causes the video processing system to perform operations of analyzing the raw video data for reporting causes the video processing system to perform operations further comprising:
determining a speed of a vehicle on the roadway within the area on the ground around the light pole (120).

8. The video processing system of claim 1, wherein the processor (201), when executing the instructions, causes the video processing system to perform operations of analyzing the raw video data for reporting causes the video processing system to perform operations further comprising:
detecting a presence of an object within the area on the ground around the light pole (120), the object representing at least one of a person or obstruction.

9. A method of processing video data at a computing device (170) including a pair of cameras (212A, 212B) coupled to a light pole (120) and facing downward or across a street from the light pole (120), the pair of cameras (212A, 212B) is configurable to provide a combined field of view to capture video data of an area beneath the light pole (120) or across the street from the light pole (120), comprising:
receiving raw video data captured by the pair of cameras (212A, 212B);
compressing, using a processor of the computing device (170), the raw video data into low-resolution video data and high-resolution video data;
storing the compressed high-resolution video data locally at the video processing system, the compressed high-resolution information accessible on-demand by authorized users of a service platform associated with one or more applications;
delivering, in real time, the compressed low-resolution video data to a remote computing device (170) via a wireless network (130, 140);
analyzing, using the processor of the computing device (170), the raw video data to identify relevant scenes for an application;
determining to report a relevant scene identified to authorized users of the service platform associated with the application;
transmitting information related to the identified relevant scene, via the network (130, 140), to at least one of the service platform or a user device for utilization by the application;
receiving a request from the service platform, via the wireless network (130, 140), to access data stored at the system for the compressed high-resolution video data related to the identified relevant scenes;
accessing the compressed high-resolution video data related the identified relevant scenes; and
transmitting, to the service platform via the wireless network (130, 140), the compressed high-resolution video data related to the identified relevant scenes.

10. The method of claim 9, wherein analyzing, using the processor of the computing device (170), the raw video data to identify the relevant scenes for the application further comprises:
generating statistics and other information using the raw video data related to activity within the area beneath the light pole; and
transmitting, to the service platform via that network (130, 140), the generated statistics and other information for utilization by the application.

11. The method of claim 9, wherein analyzing, using the processor of the computing device (170), the raw video data to identify the relevant scenes for the application further comprises:
executing a video analytics algorithms using the raw video data.

12. The method of claim 9, wherein transmitting the information related to the identified relevant scene, via the network (130, 140), to the service platform for utilization by the application further comprises:
transmitting reporting information to at least one of a parking enforcement agency, police departments, and security agency.

13. The method of claim 9, wherein receiving the raw video data captured by the pair of cameras (212A, 212B) comprises:
combining individual data feeds from the video data captured by each of the pair of cameras (212A, 212B) into a combined data feed for the video data captured by the pair of cameras (212A, 212B).

14. A machine-readable medium in communication with at least one processor, the machine-readable medium storing instructions which, when executed by the at least one processor, cause the at least one processor to carry out the method of any one of claims 9 to 13.

## Patentansprüche

1. Videoverarbeitungssystem, das mit einem Leuchtenmast (120) gekoppelt ist, umfassend:
ein Paar von Kameras (212A, 212B), das mit dem Leuchtenmast (120) gekoppelt ist und nach unten oder auf gegenüber einer Straße von dem Leuchtenmast (120) ausgerichtet ist, wobei das Paar von Kameras (212A, 212B) konfigurierbar ist, um ein kombiniertes Sichtfeld bereitzustellen, um Videodaten eines Bereichs unterhalb des Leuchtenmastes (120) oder gegenüber der Straße von dem Leuchtenmast (120) zu erfassen;
einen Sendeempfänger (206) für Kommunikationen über ein drahtloses Netzwerk mit einem entfernten Server, wie etwa einer Dienstplattform, die einer oder mehreren Anwendungen (130, 140) zugeordnet ist;
eine Speichervorrichtung (202) zum Speichern von Anweisungen;
einen Prozessor (201), der mit dem Paar von Kameras (212A, 212B), dem Sendeempfänger (206) und dem Speicher (202) gekoppelt ist, wobei der Prozessor (201) konfiguriert ist, um die Anweisungen auszuführen, um das Videoverarbeitungssystem dazu zu veranlassen, Operationen durchzuführen, umfassend:
Empfangen von Rohvideodaten, die durch das Paar von Kameras (212A, 212B) erfasst werden;
Komprimieren der Rohvideodaten in Videodaten mit niedriger Auflösung und Videodaten mit hoher Auflösung;
Speichern der komprimierten Videodaten mit hoher Auflösung lokal an dem Videoverarbeitungssystem, wobei auf die komprimierten Videodaten mit hoher Auflösung auf Anforderung durch autorisierte Benutzer der Dienstplattform, die einer Anwendung zugeordnet ist, zugegriffen werden kann;
Liefern, in Echtzeit, der komprimierten Videodaten mit niedriger Auflösung an eine entfernte Rechenvorrichtung (170) über das drahtlose Netzwerk (130, 140);
Analysieren der Rohvideodaten, um relevante Szenen für die Anwendung zu identifizieren;
Bestimmen, eine relevante Szene, die identifiziert wurde, an autorisierte Benutzer der Dienstplattform, die der Anwendung zugeordnet ist, zu berichten;
Übertragen von Informationen, welche die identifizierte relevante Szene betreffen, über das drahtlose Netzwerk, an mindestens eine von der Dienstplattform und einer Benutzervorrichtung zur Nutzung durch die Anwendung;
Empfangen einer Anfrage von der Dienstplattform, über das drahtlose Netzwerk (130, 140), um auf Daten zuzugreifen, die an dem System für die komprimierten Videodaten mit hoher Auflösung, welche die identifizierten relevanten Szenen betreffen, gespeichert sind;
Zugreifen auf die komprimierten Videodaten mit hoher Auflösung, welche die identifizierten relevanten Szenen betreffen; und
Übertragen, an die Dienstplattform über das drahtlose Netzwerk (130, 140), der komprimierten Videodaten mit hoher Auflösung, welche die identifizierten relevanten Szenen betreffen.

2. Videoverarbeitungssystem nach Anspruch 1, wobei der Prozessor (201), wenn er die Anweisungen ausführt, das Videoverarbeitungssystem dazu veranlasst, Operationen durchzuführen, ferner umfassend:
Erzeugen von statistischen und anderen Informationen, die Aktivitäten innerhalb des Bereichs betreffen; und
Übertragen der statistischen und anderen Informationen, über das drahtlose Netzwerk (130, 140), an die Dienstplattform zur Nutzung durch die Anwendung.

3. Videoverarbeitungssystem nach Anspruch 1, wobei der Prozessor (201), wenn er die Anweisungen ausführt, das Videoverarbeitungssystem dazu veranlasst, Operationen durchzuführen, umfassend Analysieren der Rohvideodaten zum Berichten, was das Videoverarbeitungssystem dazu veranlasst, Operationen durchzuführen, ferner umfassend:
Ausführen eines Videoanalysealgorithmus unter Verwendung der Rohvideodaten.

4. Videoverarbeitungssystem nach Anspruch 1, wobei der Prozessor (201), wenn er die Anweisungen ausführt, das Videoverarbeitungssystem dazu veranlasst, Operationen durchzuführen, umfassend Übertragen der Informationen, welche die identifizierte relevante Szene betreffen, über das drahtlose Netzwerk (130, 140), an mindestens eine von der Dienstplattform oder einer Benutzervorrichtung zur Nutzung durch die Anwendung, ferner umfassend:
Übertragen von Berichtinformationen an mindestens eine von einer Parkverstoßahndungsbehörde, Polizeibehörde und Sicherheitsbehörde.

5. Videoverarbeitungssystem nach Anspruch 1, wobei der Prozessor (201), wenn er die Anweisungen ausführt, das Videoverarbeitungssystem dazu veranlasst, Operationen zum Analysieren der Rohvideodaten zum Melden durchzuführen, was das Videoverarbeitungssystem dazu veranlasst, Operationen durchzuführen, ferner umfassend:
Bestimmen einer Belegung eines Parkplatzes unterhalb des Leuchtenmastes (120) oder gegenüber der Straße von dem Leuchtenmast (120) innerhalb des Bereichs.

6. Videoverarbeitungssystem nach Anspruch 1, wobei der Prozessor (201), wenn er die Anweisungen ausführt, das Videoverarbeitungssystem dazu veranlasst, Operationen zum Analysieren der Rohvideodaten zum Melden durchzuführen, was das Videoverarbeitungssystem dazu veranlasst, Operationen durchzuführen, ferner umfassend:
Bestimmen mindestens einer von einer Ankunft und Abfahrt eines Fahrzeugs in dem Parkplatz innerhalb des Bereichs unterhalb des Leuchtenmastes (120).

7. Videoverarbeitungssystem nach Anspruch 1, wobei der Prozessor (201), wenn er die Anweisungen ausführt, das Videoverarbeitungssystem dazu veranlasst, Operationen zum Analysieren der Rohvideodaten zum Melden durchzuführen, was das Videoverarbeitungssystem dazu veranlasst, Operationen durchzuführen, ferner umfassend:
Bestimmen einer Geschwindigkeit eines Fahrzeugs auf der Fahrbahn innerhalb des Bereichs auf dem Boden um den Leuchtenmast (120).

8. Videoverarbeitungssystem nach Anspruch 1, wobei der Prozessor (201), wenn er die Anweisungen ausführt, das Videoverarbeitungssystem dazu veranlasst, Operationen zum Analysieren der Rohvideodaten zum Melden durchzuführen, was das Videoverarbeitungssystem dazu veranlasst, Operationen durchzuführen, ferner umfassend:
Erfassen einer Präsenz eines Objekts innerhalb des Bereichs auf dem Boden um den Leuchtenmast (120), wobei das Objekt mindestens eines von einer Person oder einem Hindernis darstellt.

9. Verfahren zum Verarbeiten von Videodaten an einer Rechenvorrichtung (170), die ein Paar von Kameras (212A, 212B) aufweist, das mit einem Leuchtenmast (120) gekoppelt ist und nach unten oder auf gegenüber einer Straße von dem Leuchtenmast (120) ausgerichtet ist, wobei das Paar von Kameras (212A, 212B) konfigurierbar ist, um ein kombiniertes Sichtfeld bereitzustellen, um Videodaten eines Bereichs unterhalb des Leuchtenmastes (120) oder gegenüber der Straße von dem Leuchtenmast (120) zu erfassen, umfassend:
Empfangen von Rohvideodaten, die durch das Paar von Kameras (212A, 212B) erfasst werden;
Komprimieren, unter Verwendung eines Prozessors der Rechenvorrichtung (170), der Rohvideodaten in Videodaten mit niedriger Auflösung und Videodaten mit hoher Auflösung;
Speichern der komprimierten Videodaten mit hoher Auflösung lokal an dem Videoverarbeitungssystem, wobei auf die komprimierten Informationen mit hoher Auflösung auf Anforderung durch autorisierte Benutzer einer Dienstplattform, die einer oder mehreren Anwendungen zugeordnet ist, zugegriffen werden kann;
Liefern, in Echtzeit, der komprimierten Videodaten mit niedriger Auflösung an eine entfernte Rechenvorrichtung (170) über ein drahtloses Netzwerk (130, 140);
Analysieren, unter Verwendung des Prozessors der Rechenvorrichtung (170), der Rohvideodaten, um relevante Szenen für eine Anwendung zu identifizieren;
Bestimmen, eine relevante Szene, die identifiziert wurde, an autorisierte Benutzer der Dienstplattform, die der Anwendung zugeordnet ist, zu berichten;
Übertragen von Informationen, welche die identifizierte relevante Szene betreffen, über das Netzwerk (130, 140), an mindestens eine von der Dienstplattform und einer Benutzervorrichtung zur Nutzung durch die Anwendung;
Empfangen einer Anfrage von der Dienstplattform, über das drahtlose Netzwerk (130, 140), um auf Daten zuzugreifen, die an dem System für die komprimierten Videodaten mit hoher Auflösung, welche die relevanten Szenen betreffen, gespeichert sind;
Zugreifen auf die komprimierten Videodaten mit hoher Auflösung, welche die identifizierten relevanten Szenen betreffen; und
Übertragen, an die Dienstplattform über das drahtlose Netzwerk (130, 140), der komprimierten Videodaten mit hoher Auflösung, welche die identifizierten relevanten Szenen betreffen.

10. Verfahren nach Anspruch 9, wobei ein Analysieren, unter Verwendung des Prozessors der Rechenvorrichtung (170), der Rohvideodaten, um relevante Szenen für die Anwendung zu identifizieren, Folgendes umfasst:
Erzeugen von Statistiken und anderen Informationen unter Verwendung der Rohvideodaten, die Aktivitäten innerhalb des Bereichs unterhalb des Leuchtenmastes betreffen; und Übertragen, an die Dienstplattform über das Netzwerk (130, 140), der erzeugten Statistiken und anderen Informationen zur Nutzung durch die Anwendung.

11. Verfahren nach Anspruch 9, wobei ein Analysieren, unter Verwendung des Prozessors der Rechenvorrichtung (170), der Rohvideodaten, um relevante Szenen für die Anwendung zu identifizieren, Folgendes umfasst:
Ausführen eines Videoanalysealgorithmus unter Verwendung der Rohvideodaten.

12. Verfahren nach Anspruch 9, wobei ein Übertragen der Informationen, welche die identifizierte relevante Szene betreffen, über das Netzwerk (130, 140), an die Dienstplattform zur Nutzung durch die Anwendung, ferner Folgendes umfasst:
Übertragen von Berichtinformationen an mindestens eine von einer Parkverstoßahndungsbehörde, Polizeibehörde und Sicherheitsbehörde.

13. Verfahren nach Anspruch 9, wobei ein Empfangen der Rohvideodaten, die durch das Paar von Kamera (212A, 212B) erfasst werden, Folgendes umfasst:
Kombinieren von einzelnen Datenfeeds aus den Videodaten, die durch jede von dem Paar von Kameras (212A, 212B) erfasst werden, in einen kombinierten Datenfeed für die Videodaten, die durch das Paar von Kameras (212A, 212B) erfasst werden.

14. Maschinenlesbares Medium in Kommunikation mit mindestens einem Prozessor, wobei das maschinenlesbare Medium Anweisungen speichert, die, wenn sie durch den mindestens einen Prozessor ausgeführt werden, den mindestens einen Prozessor dazu veranlassen, das Verfahren nach einem der Ansprüche 9 bis 13 auszuführen.

## Revendications

1. Système de traitement vidéo couplé à un poteau d'éclairage (120), comprenant :
une paire de caméras (212A, 212B) couplées au poteau d'éclairage (120) et tournées vers le bas ou dans une rue en face du poteau d'éclairage (120), la paire de caméras (212A, 212B) pouvant être configurée pour fournir un champ de vision combiné pour capturer des données vidéo d'une zone en dessous du poteau d'éclairage (120) ou dans la rue en face du poteau d'éclairage (120) ;
un émetteur-récepteur (206) pour des communications via un réseau sans fil avec un serveur à distance tel qu'une plateforme de services associée à une ou plusieurs applications (130, 140) ;
un dispositif de mémoire (202) pour stocker des instructions ;
un processeur (201) couplé à la paire de caméras (212A, 212B), à l'émetteur-récepteur (206) et à la mémoire (202), dans lequel le processeur (201) est configuré pour exécuter les instructions pour amener le système de traitement vidéo à effectuer des opérations comprenant :
la réception de données vidéo brutes capturées par la paire de caméras (212A, 212B) ;
la compression des données vidéo brutes en données vidéo basse résolution et en données vidéo haute résolution ;
le stockage des données vidéo haute résolution compressées localement au niveau du système de traitement vidéo, les données vidéo haute résolution compressées étant accessibles à la demande par des utilisateurs autorisés de la plateforme de services associée à une application ;
la distribution, en temps réel, des données vidéo basse résolution compressées à un dispositif informatique à distance (170) via le réseau sans fil (130, 140) ;
l'analyse des données vidéo brutes pour identifier des scènes pertinentes pour l'application ;
la détermination qu'il faut signaler une scène pertinente identifiée à des utilisateurs autorisés de la plateforme de services associée à l'application ;
la transmission d'informations liées à la scène pertinente identifiée, via le réseau sans fil, à au moins l'un de la plateforme de services ou d'un dispositif utilisateur pour une utilisation par l'application ;
la réception d'une demande en provenance de la plateforme de services, via le réseau sans fil (130, 140), d'accéder à des données stockées au niveau du système pour les données vidéo haute résolution compressées liées aux scènes pertinentes identifiées ;
l'accès aux données vidéo haute résolution compressées liées aux scènes pertinentes identifiées ; et
la transmission, à la plateforme de services via le réseau sans fil (130, 140), des données vidéo haute résolution compressées liées aux scènes pertinentes identifiées.

2. Système de traitement vidéo selon la revendication 1, dans lequel le processeur (201), lorsqu'il exécute les instructions, amène le système de traitement vidéo à effectuer des opérations comprenant en outre :
la génération de statistiques et d'autres informations liées à une activité au sein de la zone ; et
la transmission des statistiques et des autres informations, via le réseau sans fil (130, 140), à la plateforme de services pour une utilisation par l'application.

3. Système de traitement vidéo selon la revendication 1, dans lequel le processeur (201), lorsqu'il exécute les instructions, amène le système de traitement vidéo à effectuer des opérations comprenant l'analyse des données vidéo brutes pour un signalement amenant le système de traitement vidéo à effectuer des opérations comprenant en outre :
l'exécution d'un algorithme d'analyse vidéo à l'aide des données vidéo brutes.

4. Système de traitement vidéo selon la revendication 1, dans lequel le processeur (201), lorsqu'il exécute les instructions, amène le système de traitement vidéo à effectuer des opérations comprenant la transmission des informations liées à la scène pertinente identifiée, via le réseau sans fil (130, 140), à au moins l'un de la plateforme de services ou d'un dispositif utilisateur pour une utilisation par l'application comprenant en outre :
la transmission d'informations de signalement à au moins l'un d'un organisme de mise en application de stationnement, de services de police, et d'un organisme de sécurité.

5. Système de traitement vidéo selon la revendication 1, dans lequel le processeur (201), lorsqu'il exécute les instructions, amène le système de traitement vidéo à effectuer des opérations d'analyse des données vidéo brutes pour un signalement amenant le système de traitement vidéo à effectuer des opérations comprenant en outre :
la détermination d'une occupation d'un espace de stationnement en dessous du poteau d'éclairage (120) ou dans la rue en face du poteau d'éclairage (120) au sein de la zone.

6. Système de traitement vidéo selon la revendication 1, dans lequel le processeur (201), lorsqu'il exécute les instructions, amène le système de traitement vidéo à effectuer des opérations d'analyse des données vidéo brutes pour un signalement amenant le système de traitement vidéo à effectuer des opérations comprenant en outre :
la détermination d'au moins l'un d'une arrivée et d'un départ d'un véhicule dans l'espace de stationnement au sein de la zone en dessous du poteau d'éclairage (120).

7. Système de traitement vidéo selon la revendication 1, dans lequel le processeur (201), lorsqu'il exécute les instructions, amène le système de traitement vidéo à effectuer des opérations d'analyse des données vidéo brutes pour un signalement amenant le système de traitement vidéo à réaliser des opérations comprenant en outre :
la détermination d'une vitesse d'un véhicule sur la chaussée au sein de la zone sur le sol autour du poteau d'éclairage (120).

8. Système de traitement vidéo selon la revendication 1, dans lequel le processeur (201), lorsqu'il exécute les instructions, amène le système de traitement vidéo à réaliser des opérations d'analyse des données vidéo brutes pour un signalement amenant le système de traitement vidéo à effectuer des opérations comprenant en outre :
la détection d'une présence d'un objet au sein de la zone sur le sol autour du poteau d'éclairage (120), l'objet représentant au moins l'une d'une personne ou d'une obstruction.

9. Procédé de traitement de données vidéo au niveau d'un dispositif informatique (170) incluant une paire de caméras (212A, 212B) couplées à un poteau d'éclairage (120) et tournées vers le bas ou dans une rue en face du poteau d'éclairage (120), la paire de caméras (212A, 212B) pouvant être configurée pour fournir un champ de vision combiné pour capturer des données vidéo d'une zone en dessous du poteau d'éclairage (120) ou dans la rue en face du poteau d'éclairage (120), comprenant :
la réception de données vidéo brutes capturées par la paire de caméras (212A, 212B) ;
la compression, à l'aide d'un processeur du dispositif informatique (170), des données vidéo brutes en données vidéo basse résolution et en données vidéo haute résolution ;
le stockage des données vidéo haute résolution compressées localement au niveau du système de traitement vidéo, les informations haute résolution compressées étant accessibles à la demande par des utilisateurs autorisés d'une plateforme de services associée à une ou plusieurs applications ;
la distribution, en temps réel, des données vidéo basse résolution compressées à un dispositif informatique à distance (170) via un réseau sans fil (130, 140) ;
l'analyse, à l'aide du processeur du dispositif informatique (170), des données vidéo brutes pour identifier des scènes pertinentes pour une application ;
la détermination qu'il faut signaler une scène pertinente identifiée à des utilisateurs autorisés de la plateforme de services associée à l'application ;
la transmission d'informations liées à la scène pertinente identifiée, via le réseau (130, 140), à au moins l'un de la plateforme de services ou d'un dispositif utilisateur pour une utilisation par l'application ;
la réception d'une demande en provenance de la plateforme de services, via le réseau sans fil (130, 140), d'accéder à des données stockées au niveau du système pour les données vidéo haute résolution compressées liées aux scènes pertinentes identifiées ;
l'accès aux données vidéo haute résolution compressées liées aux scènes pertinentes identifiées ; et
la transmission, à la plateforme de services via le réseau sans fil (130, 140), des données vidéo haute résolution compressées liées aux scènes pertinentes identifiées.

10. Procédé selon la revendication 9, dans lequel l'analyse, à l'aide du processeur du dispositif informatique (170), des données vidéo brutes pour identifier des scènes pertinentes pour l'application comprend en outre :
la génération de statistiques et d'autres informations à l'aide des données vidéo brutes liées à une activité au sein de la zone en dessous du poteau d'éclairage ; et
la transmission, à la plateforme de services via ce réseau (130, 140), des statistiques et autres informations générées pour une utilisation par l'application.

11. Procédé selon la revendication 9, dans lequel l'analyse, à l'aide du processeur du dispositif informatique (170), des données vidéo brutes pour identifier les scènes pertinentes pour l'application comprend en outre :
l'exécution d'un algorithme d'analyse vidéo à l'aide des données vidéo brutes.

12. Procédé selon la revendication 9, dans lequel la transmission des informations liées à la scène pertinente identifiée, via le réseau (130, 140), à la plateforme de services pour une utilisation par l'application comprend en outre :
la transmission d'informations de signalement à au moins l'un d'un organisme de mise en application de stationnement, de services de police, et d'un organisme de sécurité.

13. Procédé selon la revendication 9, dans lequel la réception des données vidéo brutes capturées par la paire de caméras (212A, 212B) comprend :
la combinaison de sources de données individuelles issues des données vidéo capturées par chacune de la paire de caméras (212A, 212B) en une source de données combinée pour les données vidéo capturées par la paire de caméras (212A, 212B).

14. Support lisible par machine en communication avec au moins un processeur, le support lisible par machine stockant des instructions qui, lorsqu'elles sont exécutées par l'au moins un processeur, amènent l'au moins un processeur à réaliser le procédé de l'une quelconque des revendications 9 à 13.
